(19) Europäisches Patentamt / European Patent Office / Office européen des brevets

(11) **EP 3 281 376 B1**

(12) **EUROPEAN PATENT SPECIFICATION**

(45) Date of publication and mention of the grant of the patent:
**12.06.2019 Bulletin 2019/24**

(21) Application number: **15716469.0**

(22) Date of filing: **08.04.2015**

(51) Int Cl.:
***H04L 29/06*** *(2006.01)*

(86) International application number:
**PCT/EP2015/057628**

(87) International publication number:
**WO 2016/162061 (13.10.2016 Gazette 2016/41)**

(54) **IN-SESSION COMMUNICATION**

SITZUNGSINTERNE KOMMUNIKATION

COMMUNICATION EN COURS DE SESSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2018 Bulletin 2018/07**

(73) Proprietor: **Telefonaktiebolaget LM Ericsson (publ)**
**164 83 Stockholm (SE)**

(72) Inventors:
- **NOLDUS, Rogier August Caspar**
  **NL-5052 BM Goirle (NL)**
- **KANDASAMY, Ramsundar**
  **52070 Aachen (DE)**
- **LINDBLAD, Ingemar**
  **S-12638 Hägersten (SE)**

(74) Representative: **Ericsson**
**Patent Development**
**Torshamnsgatan 21-23**
**164 80 Stockholm (SE)**

(56) References cited:
**EP-A1- 1 700 419     US-A1- 2014 310 421**

- **ROSENBERG DYNAMICSOFT H SCHULZRINNE COLUMBIA U J: "An Offer/Answer Model with the Session Description Protocol (SDP); rfc3264.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 1 June 2002 (2002-06-01), XP015009042, ISSN: 0000-0003**

Remarks:
The file contains technical information submitted after the application was filed and not included in this specification

**Description**

Technical Field

The present application relates to a method, a system, devices and a computer program for setting-up a communication channel between two entities in a telecommunication network.

Background

"In-call application" is a technique whereby a voice call is enhanced with an additional service or services such as:

- Voice recording, including providing a link in the call log to the voice recording
- Speech recognition and speech transcription
- Record my geographic location
- "reminder whispering"
- (for classified users only) Obtaining information related to the remote party, such as

  ○ Current geographic location
  ○ Mobile phone IMEI, model
  ○ Subscription information
  ○ Speech-enabled user authentication
  ○ "silently" link in an additional "listen-only" party in the call

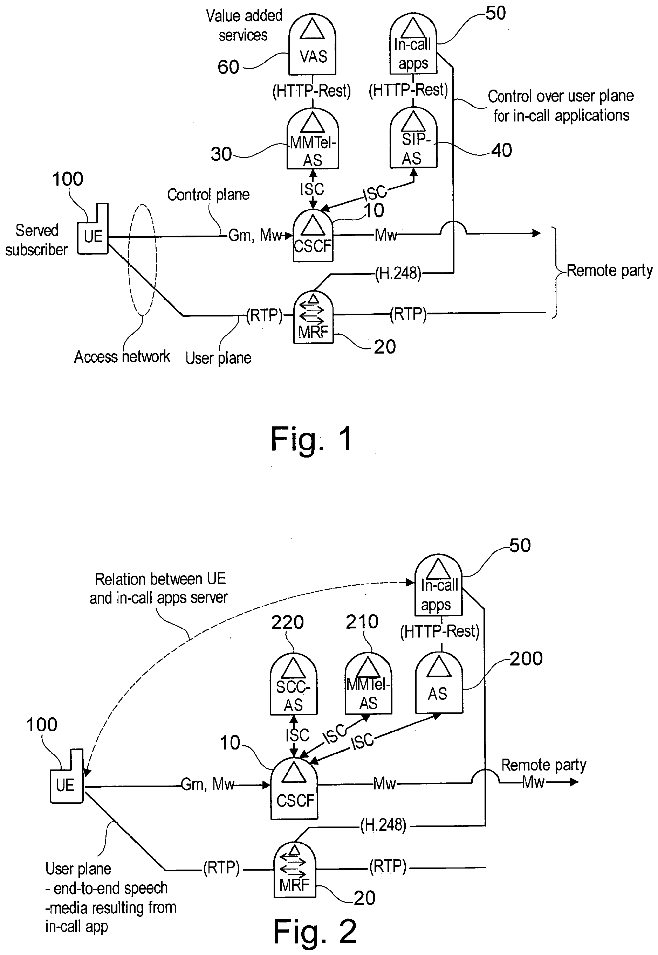

Fig. 1 shows an architectural view of a system in which in-call applications can be applied. The execution of these in-call services may take place under control of an entity in the control plane, e.g. a session initiation protocol application server (SIP-AS) 40 shown in Fig. 1 or by an entity in the user plane, by way of example a media resource function 20 (MRF). When the SIP-AS 40 is in control of the execution of the in-call service, the SIP-AS 40 may, in its turn, apply instructions to the MRF 20, e.g. for voice recording. In that case the SIP-AS 40 is in control, whereas the MRF 20 does the execution of the service such as the voice recording. As can be deduced from Fig. 1, a mobile entity or UE 100 may have a control plane connection by a CSCF 10 to the other, remote other remote party, wherein the user plane passes through MRF 20. The SIP-AS 40 can comprise the in-call application 50 which may be then in communication with MRF 20 for the application of the service. Furthermore, an entity 60 providing the value added services is provided which represents an application server that is functionally connected to MMTel-AS 30 (Multimedia Telephony Application Server) which is a session state model instance for augmenting the MMTel (multimedia telephony) communication session. The SIP-AS 40 may be a SIP-AS that is linked into the SIP chain specifically for providing the capability to invoke in-call applications. It comprises a functional connection towards an external application server where the actual in-call application server is being executed.

Different possibilities exist how to initiate the execution of an in-call service.
Manners to initiate the execution of an in-call service comprise (non-exhaustive):

- Voice command: the user can pronounce a particular word that triggers the execution of the service.
- DTMF tone;
- HTTP; a separate data channel needs to be established (mobile data connection) towards the in-call application server.

The use of voice commands is inherently problematic. A first problem with voice commands is that the remote (destination) party hears the command. Another problem with voice commands is that it may not always be captured correctly. A further problem with voice commands is that it requires the user plane to be always routed through the Media resource function, to capture a possible voice command. Summarizing:

- Voice command: the user can pronounce a particular word that triggers the execution of the service. Hereto, the user plane of the call shall be unconditionally anchored in an MRF. Additional disadvantages comprise:

  ○ Voice command can be heard by remote party;
  ○ The system (specifically: the MRF) needs to "learn" the voice command;
  ○ Limited number of commands can be used at any one time;
  ○ Cannot be used when the call is on hold, since there is then no user plane data transmission;

- DTMF tone; disadvantages comprise:

  ○ Tone can be heard by remote party;
  ○ Limited number of commands possible (16 DTMF tones standardized of which 12 are available through the keypad);

- HTTP; a separate data channel needs to be established (mobile data connection) towards the in-call application server; the http session must then be correlated by the in-call application server with the service logic processing instance for this subscriber's voice call.

EP 1 700 419 A1 discloses a method for transferring floor status information during the establishment of a SIP session between a SIP application server and an end user terminal as an extension to the SDP offer and answer mechanism.

Summary

Accordingly, a need exists to overcome the above-mentioned problems and to be able to set up further communication channels in the channel provided by the SIP session.
This need is met by the features of the independent claim. Further aspects are described in the dependent claims.
According to a first aspect a method is provided by an initiating entity to initiate the set up of communication channels for exchange of information between the initiating entity and more than one responding entities. The initiating entity and the more than one responding entities are located in an end-to-end control channel existing between a first entity and a second entity. According to one step, a first SIP message is transmitted on the end-to-end control channel between the first entity and the second entity. The first message comprises as a destination address the second entity address, wherein offer data is added to the transmitted first message and the offer data indicate that the initiating entity is configured to support the communication channels and the offer data comprising an address at which the initiating entity is configured to receive the information. A second SIP message is received on the end-to-end control channel wherein the second message comprises as destination address a first entity address. The second message furthermore comprises acceptance data in response to the offer data, wherein the acceptance data indicate that a responding entity has accepted the set up of a communication channel and the acceptance data comprising an address at which the corresponding responding entity is configured to receive the information. The address at which the responding entity is configured to receive the information is stored. The received second message further comprises acceptance data originating from the more than one responding entities located in the end-to-end control channel towards the second entity, The acceptance data originating from the more than one responding entities indicating that each of the more than one responding entities have accepted to set up dedicated communication channels between the initiating entity and each of the more than one responding entities. The acceptance data further comprises addresses at which each of the more than one responding entities is configured to receive the information. The addresses of the more than one responding entities are stored at the initiating entity in order to set up the dedicated communication channels between the initiating entity and each of the more than one responding entities.

According to a further aspect the invention furthermore relates to the corresponding initiating entity operating as mentioned above. The initiating entity comprises a message managing unit configured to transmit the first message on an end-to-end control channel between the first entity and the second entity, wherein the first SIP message comprises as a destination address a second entity address. The message managing unit is configured to add offer data to the transmitted first message, the offer data indicating that the initiating entity is configured to support the communication channels and the offer data comprising an address at which the initiating entity is configured to receive the information. Furthermore, the message managing unit is configured to receive a second SIP message on the end-to-end control channel, wherein the second message comprises as the destination address an address of the first entity. The second message furthermore comprises acceptance data in response to the offer data, the acceptance data indicate that the responding entity has accepted the set up of a communication channel and the acceptance data comprise the address at which the responding entitiy is configured to receive the information. Furthermore, a storage unit is provided configured to store the address at which the responding entity is configured to receive the information. The received second message further comprises acceptance data originating from the more than one responding entities located in the end-to-end control channel towards the second entity, The acceptance data originating from the more than one responding entities indicating that each of the more than one responding entities have accepted to set up dedicated communication channels between the initiating entity and the respective one of the more than one responding entities. The acceptance data further comprises addresses at which each of the more than one responding entities is configured to receive the information. The addresses of the more than one responding entities are stored at the storage unit of the initiating entity in order to set up the dedicated communication channels between the initiating entity and each of the more than one responding entities.

The above described method/entity under the first/second aspect helps to set up a communication channel that may be used for controlling application and/or services such as the in-call services discussed in the introductory part of the specification. Both the initiating entity and the responding entities can use the end-to-end control channel where information on control messages are exchanged which have as a destination address either the first entity or the second entity. The information may furthermore contain the offer that the initiating entity is ready to set up a control channel in the end-to-end control channel with any of the entities located in the end-to-end control channel. When the initiating entity receives the acceptance data comprising the addresses from the responding entities, the initiating entity knows how to address the corresponding responding entity in order to direct a control command to the corresponding responding entity using the end-to-end control channel. The initiating entity may store the addresses of the responding entities in order to set up the service control channels between the service control initiating entity and the service control responding entities.

According to another aspect, a method by the responding entity is provided to set up communication channels for the exchange of information between more than one initiating entities and the responding entity. The more than one initiating entities and the responding entity are located in an end-to-end control channel existing between a first entity and a second entity. The responding entity receives a first SIP message on the end-to-end control channel between the first entity and the second entity, wherein the first message comprises as a destination address the second entity address. The first message furthermore comprises offer data indicating that one of the initiating entities is configured to support a communication channel and the offer data comprising the address at which said one initiating entity is configured to receive the information. The responding entity stores the address at which said one initiating entity is configured to receive the information if the responding entity accepts to set up a communication channel between said one initiating entity and the responding entity. The responding entity transmits a second SIP message to the first entity, wherein the second message comprises acceptance data in response to the offer data, wherein the acceptance data indicate that the responding entity accepts the set up of the communication channel, wherein the acceptance data furthermore comprise an address at which the responding entity is configured to receive the information. The received first message further comprises offer data originating from the more than one initiating entities located in the end-to-end control channel towards the first entity, the offer data further comprising addresses at which each of the more than one initiating entities is configured to receive the information. The received addresses of the initiating entities, where the responding entity accepts the set up of dedicated communication channels, is stored. Furthermore, the acceptance data of the second message indicates that the responding entity accepts the set up of the dedicated communication channels, and the acceptance data comprises an address at which the responding entity is configured to receive the information from the more than one initiating entities.

According to a further aspect the invention furthermore relates to the corresponding responding entity as mentioned above. When the responding entity is interested in setting up a communication channel using the end-to-end control channel, it can indicate this to the more than one initiating entities with the above-described method.

The responding entity comprises a message managing unit configured to receive a first SIP message on the end-to-end control channel between a first entity and a second entity, wherein the first message comprises as a destination address the second entity address. The first message furthermore comprises offer data indicating that one of the initiating entities is configured to support a communication channel and the offer data comprising the address at which said one initiating entity is configured to receive the information. Furthermore, a storage unit is provided configured to store the address at which said one initiating entity is configured to receive the information if the responding entity accepts the set-up of the communication channel between said one initiating entity and the responding entity. The message managing unit is configured to transmit a second message of a SIP protocol to the first entity, wherein the second message comprises acceptance data in response to the offer data. The acceptance data indicate that the responding entity accepts the set-up of the communication channel and the acceptance data comprise an address at which the responding entity is configured to receive the information. The received first message further comprises offer data originating from the more than one initiating entities located in the end-to-end control channel towards the first entity, the offer data further comprising addresses at which each of the more than one initiating entities is configured to receive the information. The received addresses of the more than one initiating entities, where the responding entity accepts the set up of dedicated communication channels, is stored in the storage unit. Furthermore, the acceptance data indicates that the responding entity accepts the set up of the dedicated communication channels, and the acceptance data comprises an address at which the responding entity is configured to receive the information from the more than one initiating entities.

Brief Description of the Drawings

Fig. 1 schematically shows an architectural view of an environment in which a service may be applied to the user plane.

Fig. 2 is a schematic architectural view of a system in which, according to aspects of the invention, an end-to-end control channel is used for controlling an application of a service to a user plane.

Fig. 3 is an example schematic representation of internal architecture of a mobile entity for signaling between the mobile entity and the application server.

Fig. 4 is an example schematic representational view of in-session signaling between the mobile entity and the application server.

Fig. 5 is an example schematic representation of a functional decomposition of a serving call session control function involved in the end-to-end control channel.

Fig. 6 shows an example schematic representation of the different session parts in the end-to-end control channel.

Fig. 7 is an example schematic representational view of a communication between the mobile entity and the application server.

Fig. 8 is an example schematic view of a message exchange for establishing the control channel between the mobile user entity and the application server.

Fig. 9 is an example schematic representation of a message flow for controlling an in-call application.

Fig. 10 is an example schematic message exchange for establishing a signaling relationship between a first mobile entity and a first application server and a second mobile entity and a second application server.

Fig. 11 is an example schematic architectural view, wherein a mobile entity has different relationships to different application servers.

Fig. 12 is an example schematic view of a message exchange for establishing multiple controls with different application servers.

Fig. 13 shows an example of the possible control channels between the different pairs of entities in the end-to-end control channel.

Fig. 14 shows an example of an in-session signaling relationship between an arbitrary pair of the entities contained in the end-to-end control channel.

Fig. 15 shows an example message flow for establishing a signaling relationship or control channel between two of the entities in the end-to-end control channel.

Fig. 16 shows an example schematic view of multiple in-session application signaling relationships.

Fig. 17 shows an example schematic architectural view of how an entity can play the role of the service control initiating entity, a service control responding entity or a service control entity.

Fig. 18 is an example schematic representation of how service control channels can be built between different entities in the end-to-end control channel.

Fig. 19 is an example schematic architectural view of a service application entity.

Detailed Description

In the following, embodiments will be described in detail with reference to the accompanying drawings.

It is to be understood that the following description of the embodiments is not to be taken in a limiting sense. The scope of the invention is not intended to be limited by the embodiments described hereinafter or by the drawings, which are taken to be illustrative only. Furthermore, it is to be understood that the features mentioned above and further below can be used not only in the respective combinations indicated, but also in other combinations or in isolation. Features of the above or below mentioned aspects and embodiments may be combined with each other in other embodiments.

The drawings are to be regarded as being schematic representations, and elements illustrated in the drawings are not necessarily shown to scale. Rather, the various elements are represented such that their function and general purpose becomes apparent to a person skilled in the art. Any connection or coupling between functional bocks, devices, components or other physical or functional units shown in the drawings or described herein may be implemented by a direct or by an indirect connection or coupling. A coupling between components may be established over a wired or wireless connection. Furthermore, functional blocks may be implemented in hardware, firmware, software or a combination thereof.

According to one aspect, a transparent communication channel may be established on top of another communication channel or within a session, for example within a SIP (Session Initiation Protocol) session. The communication channel may be established between a mobile entity (UE) and a server or between 2 servers in the network. The servers may be application servers (for example SIP application servers). This enables for example the UE to provide instructions to a SIP-AS, related to the execution of an in-call application. Vice versa, the SIP-AS may send instructions to the UE during the call.

The transfer of the instructions or response messages between the UE and the SIP-AS may occur fully in line with SIP signaling. Normally, when a call is established between two entities such as UE-A and UE-B, then when UE-A sends a SIP request towards UE-B, the SIP request is destined for the end point of the SIP session, i.e., the SIP request is destined for UE-B. In other cases, the SIP request (for example REFER) is destined for the MMTel-AS, for initiating Explicit Communication Transfer (ECT).

The method below describes as an example a communication channel between a UE-A and a SIP-AS. The method entails that the UE-A and SIP-AS exchange during call establishment, or on top of an already established call, an in-call application process identifier or offer data. The offer data indicate that the sending entity (UE-A) is ready to establish a relationship (for example a control relationship) with any of the entities located in the end-to-end control channel in the direction of the second entity which builds the endpoint of the end-to-end control channel. This identifier can be used by the UE or the SIP-AS to send an in-call message (for example in-call) application instruction to the SIP-AS or UE respectively.

The below in detail describes methods, devices, system and computer program products can be used for any (communication) channel to be established between two network entities within an end-to-end control channel for communicating and/or exchanging messages (e.g. control messages) between those two network entities. The two network elements may be the end points of the end-to-end control channel, they may be entities located between the end points of the end-to-end control channel, or a mixture of both. The (communication) channel may be a service communication channel for controlling a service located in one of the two network entities, or the (communication) channel may be used to exchange any kind of information between the two network entities (for example status messages, control messages, service control messages, UE specific information, call specific information, ...). An example of the latter comprises the transfer of HTML update information, from an application server to an application client, said application client being contained in a mobile terminal and said transfer being for the purpose of providing the application client with call progress information.

Fig. 2 shows as an example embodiment an architectural view of an IMS terminal or UE 100 connected to and registered in an IMS (IP Multimedia Subsystem) core network. The UE 100 may establish communication sessions through the IMS network. The communication sessions are handled by SCC-AS (Service Centralization and Continuity Application Server) 220, an Enterprise Application Server 200 and Multimedia Telephony Application Server 210. The sequence of the invocation of an application server depends on the call case. Application Server 200 is the application server on which residential or enterprise advanced services are deployed. The UE 100 can furthermore generate a relation to the in-call application 50 via which the application of the service to the user plane in MRF 20 is controlled.

At call establishment SIP signaling traverses the CSCF 10 and the SIP-AS 200-220. The SIP session is established end-to-end between the calling party and the called party. It is desirable, however, that the UE 100 can exchange signaling with the application servers.

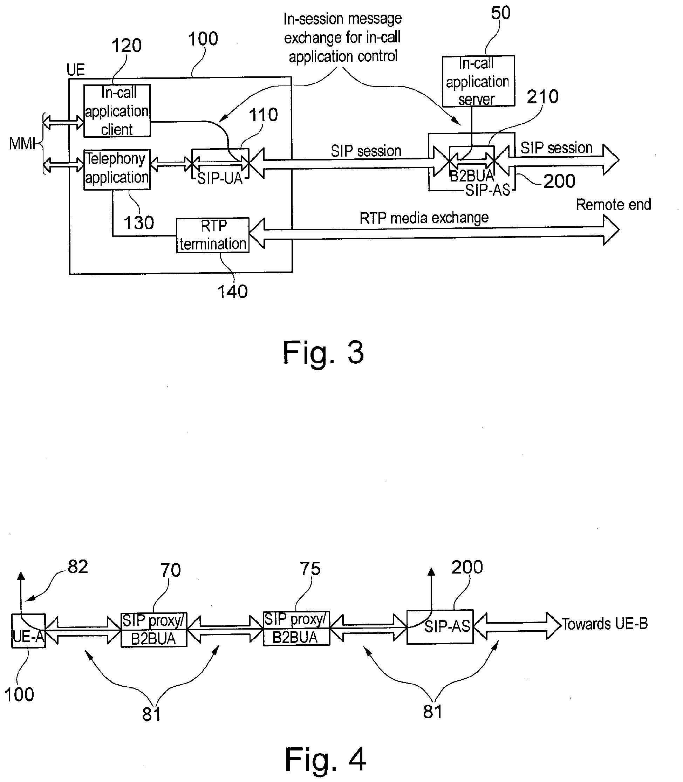

As indicated in Fig. 3, the signaling exchange between the UE 100 and the SIP-AS 200 is taking place within the end-to-end SIP session. The UE 100 comprises an in-call application client 120 and a telephony application 130. At the side of the UE 100, the signaling exchange related to the in-call application control is tapped into or from the SIP user agent 110. An RTP termination 140 is provided for the user plane data exchange with the other end. At the side of the application server 200, the signaling exchange related to the in-call application control is tapped into or from the B2BUA (Back-to-Back User Agent) and from there to the in-call application server 50. The SIP signaling related to in-call application control may be not related to the actual SIP session. This means that it is not used for establishing, maintaining or releasing the SIP session.

This is further shown in Fig. 4, in which a two-tier signaling structure within a SIP session is shown. The Tier 1 signaling shown by reference numeral 81 is formed by the regular SIP signaling used for establishing, maintaining and terminating the SIP session. The SIP session may span several SIP signaling entities between UE-A and UE-B, such as for example P-CSCF, S-CSCF, SCC-AS, MMTel-AS etc. In the embodiment shown, the SIP session passes two SIP proxies 70, 75. Furthermore, the in-session application signaling shown by reference numeral 82 is indicated. This is formed by the SIP message exchange between two SIP signaling endpoints. Here, UE-A 100 and SIP-AS 200. These SIP signaling endpoints are located in two designated positions within the SIP session. In UE 100, the in-session signaling is directed to the in-call application client as indicated above in Fig. 3, and in the SIP-AS 200 the signaling is directed to the in-call application server.

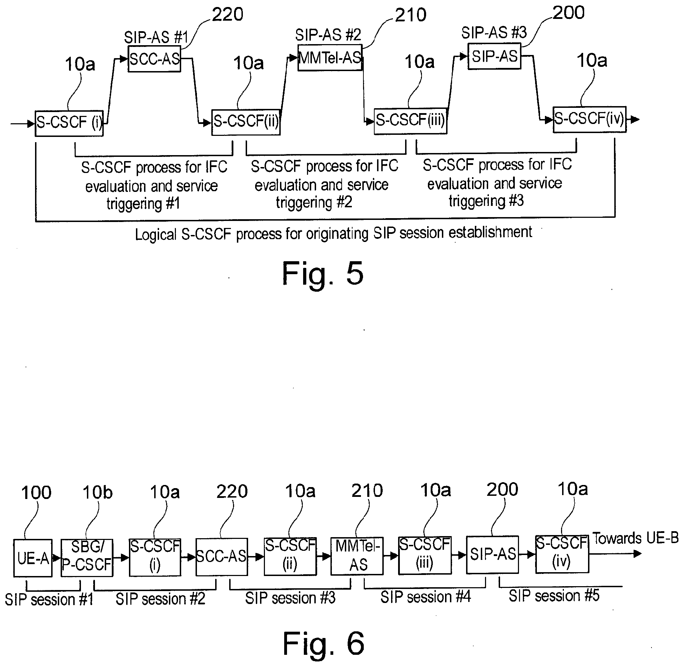

In the example of Fig. 4, the SIP session is established between UE-A and UE-B, whereby the SIP session traverses the SIP-AS serving UE-A. In-between UE-A 100 and the SIP-AS 200, there are server SIP signaling entities. Typically, there may be the P-CSCF, the S-CSCF (i), the SCC-AS, the S-CSCF (ii), the MMTel-AS and the S-CSCF (iii). The following distinction between S-CSCF (i), S-CSCF (ii) and S-CSCF (iii) is made: S-CSCF (i) represents the process that sends the Invite to the SCC-AS; S-CSCF (ii) represents the process that receives the Invite back from the SCC-AS and that sends the Invite to the MMTel-AS. S-CSCF (iii) represents the process that receives the Invite back from the MMTel-AS 210 and that sends the Invite to the SIP-AS 200. Thus, Fig. 5 shows as an example the functional decomposition of the S-CSCF 10a, wherein the SIP entities depicted in the upper part represent B2BUA, wherein the SIP entities depicted in the lower part of Fig. 5 represent a SIP proxy, whereas the SIP session is established between UE-A and UE-B. The in-session application signaling runs between the two signaling endpoints on the SIP path. Signaling endpoints may be a user agent, e.g. a SIP terminal or a B2BUA.

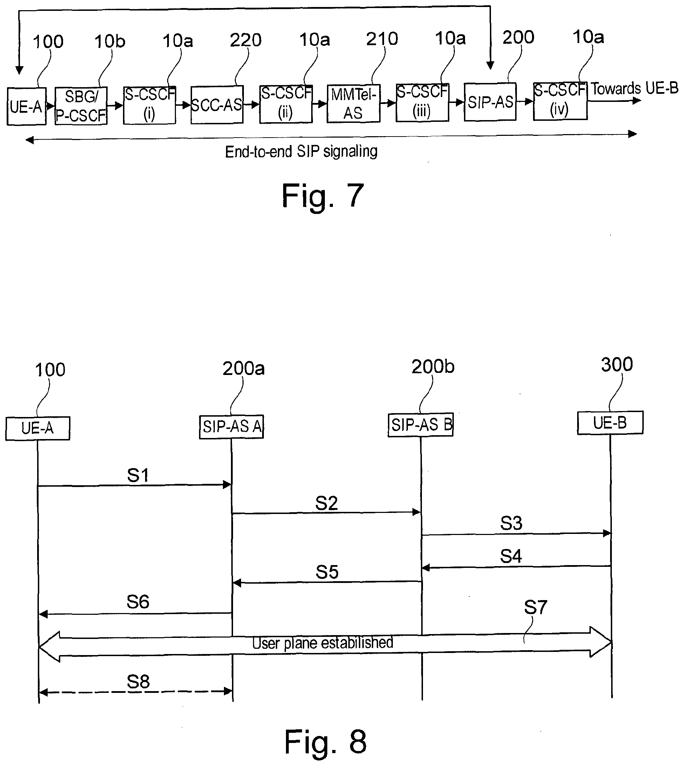

The explanation shown in Fig. 5 may be simplified as shown in Fig. 6 for explanatory purposes. The first SIP session is established between UE-A 100 and the SBG/P-CSCF 10b. The second SIP session is established between the SGB/P-CSCF 10b and the SCC-AS 220. The third SIP session is established between SCC-AS 220 and the MMTel-AS 210. The fourth SIP session is established between MMTel-AS 210 and the SIP-AS 200. The fifth SIP session is established between the SIP-AS 200 and the remote party. The application signaling relationship that is required for the UE 100 to control in-call applications is shown for example in Fig. 7. Between UE-A 100 and SIP-AS 200 a signaling relationship is established so that the UE-A 100 may control the in-call applications of the SIP-AS 200.

Fig. 8 shows an example sequence diagram for establishing the application signaling relationship between the UE-A 100 and the SIP-AS 200. The SIP entities in-between the UE-A 100 and the UE-B 300 and the SIP-AS serving the respective party, such as the P-CSCF, S-CSCF, SCC-AS and MMTel-AS, are not shown. Provisional responses and the acknowledgement transactions are not shown either. The SIP-AS 200a shown in the diagram may be the application server 200 shown in Fig. 2. The sequence diagram conveys how the UE-A 100 and SIP-AS 200a establish a signaling relationship. In step S1 the UE-A 100 sends an Invite request comprising the content: *Invite sip: B-party-number@B-party-domain SIP/2.0.* Furthermore, it comprises a session application header such as: *Session-application: <sip:in-call-application@A-party-IP-address>.*

The UE 100 indicates with the SIP header that it can receive SIP messages, especially SIP Info that are addressed to *sip: in-call-application@A-party-IP-address.* In step S2, this Invite request is further transmitted to SIP-AS 200b comprising the content: *Invite sip:B-party-number@B-party-domain SIP/2.0.* As can be deduced from the comparison of the content contained in steps S1 and S2, the session application content was removed by SIP-AS 200a. In step S3, the content is forwarded to the UE-B 300 comprising the same content as present in step S2.

In steps S4 and S5, the SIP 200 Ok message sent back to the SIP-AS 200b and SIP-AS 200a respectively. Now, in step S6 the SIP-AS 200a serving the UE-A 100 adds the session application header to the 200 Ok message, such as *Session-application:<sip:in-call-application@sipas.ims.mnc702.mcc320.3gppnetwork.org>.* With this added session application content, the SIP-AS 200a indicates with this header that it can receive SIP messages, especially SIP Info messages that are addressed to *<sip:in-call-application@sipas.ims.mnc702.mcc320.3gppnetwork.org>.*

By virtue of (i) UE-A comprising *sip:in-call-application@A-party-IP-address* in the session establishment request and (ii) SIP-AS including *sip:in-call-application@sipas.ims.mnc702.mcc320.3gppnetwork.org* in the session establishment answer, UE-A and SIP-AS have established an application signaling relationship in step S8. The establishment of this relationship does not affect the end-to-end SIP session establishment or the establishment of the user plane in S7.

UE-A 100 and SIP-AS 200a can utilize this Application signaling relationship to exchange SIP Info messages for the control of in-call applications. These messages are routed in accordance with regular SIP signaling. That means, among others, that these messages will be sent towards the contact address of the UE (SIP-AS → UE) or towards the Contact address of the SIP-AS (UE → SIP-AS). (since the SIP-AS is acting as B2BUA, the SIP signaling is addressed towards the SIP-AS' Contact address). When the UE 100 receives a SIP Info message containing the header *Session-application: <sip:in-call-application@A-party-IP-address>*, the UE knows that this SIP message is meant for the UE-resident application "in-call-application". The SIP message as such will be handled as per the regular SIP transaction rules, comprising the sending of a 200 Ok. The message will, however, not be forwarded to the phone application. Instead, it will be forwarded to the in-call application client 120 of Fig. 3.

Likewise, when the SIP-AS 200a receives a SIP Info message containing the header *<sip:in-call-application@sipas.ims.mnc702.mcc320.3gppnetwork.org>,* the SIP-AS 200a knows that this SIP message is meant for SIP-AS resident application "in-call-application" 50. The SIP message as such may be handled as per the regular SIP transaction rules, comprising the sending of a 200 Ok. The message may, however, not be forwarded to the call handling application in the SIP-AS. Instead, it will be forwarded to the in-call application server. Depending on the use case the SIP Info message may be terminated at the SIP-AS 200a (and so not forwarded to UE-B 300) or it may be forwarded to UE-B 300 (with or without the header *sip:in-call-application@sipas.ims.mnc702.mcc320.3gppnetwork.org).*

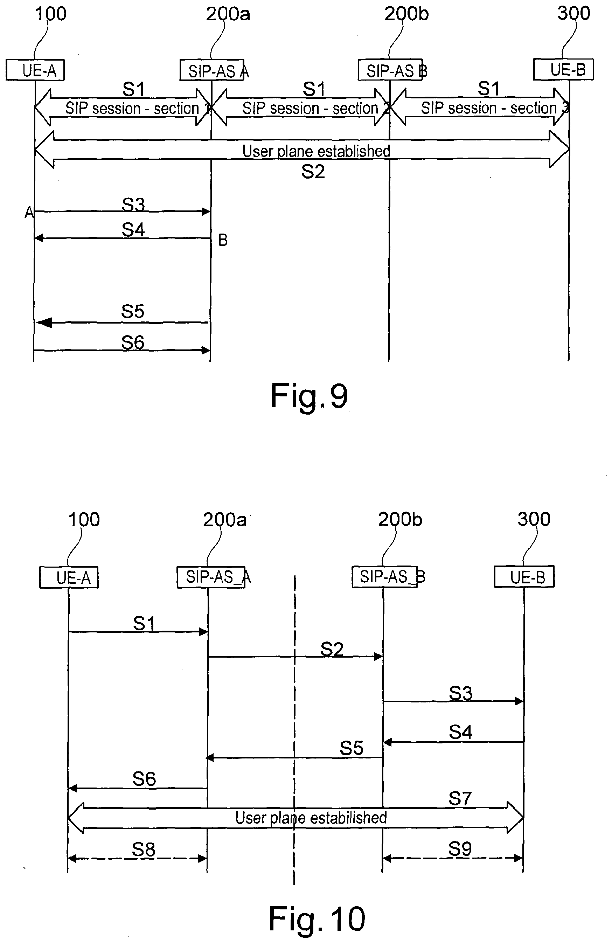

Fig. 9 shows an example for an in-session signaling between UE-A 100 and SIP-AS 200a for in-call application control. As a preamble, it is assumed that during the establishment of SIP session from UE 100 to UE 300, UE 100 and SIP-AS A 200a have exchanged their respective in-call application address. As a result, UE 100 and SIP-AS 200a have established an in-call application signaling relationship. Both UE-A and SIP-AS A are ready to receive an in-call application data message. Thus, the different SIP session sections in step S1 are established and the user plane is established as indicated by step S2.

At time A, the user intends to trigger the execution of an in-call application (step S3). Hereto, the UE-A sends a SIP Info "towards" the B-party: *INFO <B-party contact address> SIP/2.0 Session-application: <sip:in-call-application@sipas.ims.mnc702.mcc320.3gppnetwork.org> <message body>* (step S3). More specifically, it sends the SIP Info using the contact address and Route set as applicable for the SIP session that is established towards the B-party. UE-A comprises the header *Session-application: <sip:in-call-application@sipas.ims.mnc702.mcc320.3gppnetwork.org>.* The body of the Info message may contain the in-call application instruction, such as "Record call", or "Connect confidential third party".

When the Info message arrives at the SIP-AS 200a, the message is forwarded to the in-call application server; this forwarding is the result of the presence of the SIP header *Session-application: <sip:in-call-application@sipas.ims.mnc702.mcc320.3gppnetwork.org>.* The SIP-AS is acting as B2BUA. The SIP-AS may respond with 200 Ok (step S4); i.e. it may not pass the Info message on. At B, the in-call application server starts the execution of the requested service.

For the actual in-call application control, syntax may be defined. The body of the Info message of step S5: *INFO <A-party contact address> SIP/2.0 Session-application: <sip:in-call-application@A-party-IP-address> <message body>* may contain the command for executing the required in-call application. The 200 Ok of the Info message may carry the result of the execution (step S6). Fig. 9 additionally shows the example case that the in-call application server 200a sends an in-call instruction to UE-A 100. The principle is identical to the case, whereby UE 100 sends the in-call application instruction.

Fig. 10 shows a signaling sequence diagram for another embodiment in which both UE-A 100 and UE-B 300 establish an in-call application signaling relationship with their respective SIP-AS 200a, 200b. The establishment of the application signaling relationship between UE-A and SIP-AS A 200a and the establishment of the application signaling relationship between UE-B 300 and SIP-AS B 200b occur independently of one another. In step S1 of Fig. 10, a SIP Invite is sent to SIP-AS 200a as follows: *Invite sip: B-party-number@B-party-domain SIP/2.0 Session-application: <sip:in-call-application@A-party-IP-address>,* wherein the Invite message is forwarded to SIP-AS B in step S2 with the following content: *Invite sip:B-party-number@B-party-domain SIP/2.0.* The session application header may be not passed between S-CSCF serving the A-party and the S-CSCF serving the B-party. In step S3, the Invite message is forwarded to UE-B 300 with the session application being added: *Invite sip:B-party-number@B-party-IP-address SIP/2.0 Session-application: <sip:in-call-application@sipas-b.ims.mnc702.mcc320.3gppnetwork.org>.* In step S4, the SIP 200 Ok message comprises the content that the UE-B 300 accepts to set up a control channel and adds the content *SIP/2.0 200 Ok Session-application: <sip:in-call-application@B-party-IP-address>.* The session application content may be removed by SIP-AS B 200b before the SIP 200 Ok message is transmitted in step S5 to SIP-AS A 200a, where in step S6 the offer from UE-A to SIP-AS A is accepted by adding the following content: *SIP/2.0 200 Ok Session-application: <sip:in-call-application@sipas-a.ims.mnc702.mcc320.3gppnetwork.org>.* The user plane is established in step S7. The application signaling relationship is generated in step S8 between UE-A 100 and SIP-AS A 200a. The application signaling relationship is established in step S9 between UE-B 300 and SIP-AS B 200b. At the times indicated by the arrows S8 or S9, the application signaling relationship may be used. The application signaling relationship between UE-A and SIP-AS A may be established after step S6 is received at UE-A, and the application signaling relationship between UE-B 300 and SIP-AS B 200b may be established when SIP-AS B has received step S4.

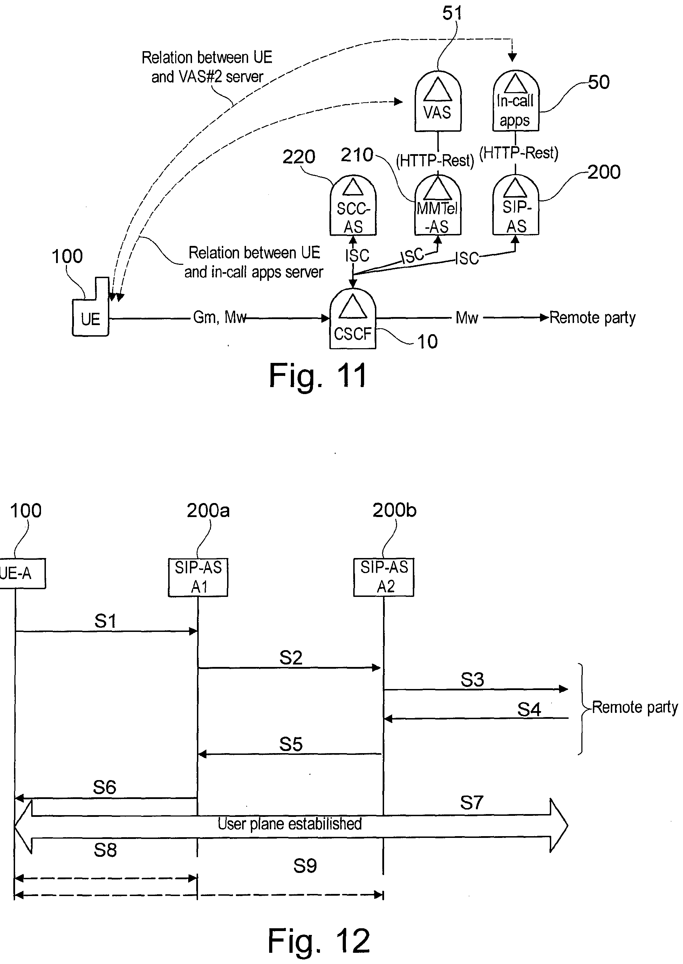

Furthermore, it is possible that the mobile entity establishes an application signaling relationship with more than one service application entities, e.g. two application servers. This is shown in example Fig. 11. The SIP signaling for the deployment case shown in Fig. 11 runs between UE 100 and MMTel-AS 210 and between UE-100 and SIP-AS 200. MMTel-AS 210 and SIP-AS 200 may extend the application signaling relationship towards an external application server. This extending may be done through HTTP-Rest. HTTP-Rest is a designated protocol for extending the SIP application service logic towards a higher layer service platform. So, the signaling for the in-call application runs between UE 100 and MMTel-AS 210 and between UE 100 and SIP-AS 200, but MMTel-AS 210 and SIP-AS 200 extend the actual in-call command towards the application server 51, 50 that is functionally connected to the MMTel-AS 210 and SIP-AS 200 respectively through a northbound interface.

Fig. 12 shows the corresponding example signal sequence diagram for establishment of the multiple in-call application signaling relationships. In steps S1 and S2, an Invite request is transmitted from UE-A 100 via SIP-AS A1 200a and SIP-AS A2 200b, both messages comprising the following content: *Invite sip:B-party-number@B-party-domain SIP/2.0 Session-application: <sip:in-call-application@A-party-IP-address>.* In step S3, the Invite messages forwarded to the remote party with the session application header may be removed by the application server 200b. The SIP 200 Ok message is received in step S4, and in step S5 the SIP-AS A2 200b adds the acceptance data to set up the in-call signaling relationship as follows: *SIP/2.0 200 Ok Session-application: <sip:in-call-application@sipas-a2.ims.mnc702.mcc320.3gppnetwork.org>.* In step S6, SIP-AS A1 200a adds its acceptance data so that in step S6 the UE 100 receives the following message:
*SIP/2.0 200 Ok*
*Session-application: <sip:in-call-application@sipas-a1.ims.mnc702.mcc320.3gppnetwork.org> Session-application: <sip:in-call-application@sipas-a2.ims.mnc702.mcc320.3gppnetwork.org>.* The user plane is established in step S7, the first relationship being established in step S8, the second application signaling relationship being established in step S9. It should be understood that steps S7, S8 and and S9 need not be carried out in the order indicated. For example step S8 may occur earlier than step S9 or both steps may occur simultaneously.

The two SIP-AS's both return their in-call application signaling addresses towards UE-A so that UE-A 100 establishes two independent relationships. The UE 100 can subscribe to two sets of in-call application services, one set facilitated by SIP-AS 200a, the other set being offered by in-call apps of SIP-AS 200b.

Generally, the UE 100 may be preconfigured with the address of the in-call application servers with which it can establish an in-call application signaling relationship. When the UE has received in the 200 Ok message comprising the session application header from the different application servers, the UE 100 knows that the relationship(s) is/are established and that it can exchange in-call application signaling with each of the application servers 200a, 200b.

In practice, the address of the application server with which the UE can establish an in-call application signaling relationship may be configured in the UE as a wild card address. For a particular call, the SIP-AS that is linked into the SIP session may be one of a group of load sharing/redundant SIP-AS's. The name of each such SIP-AS would match with the wild card address configured in the UE 100.

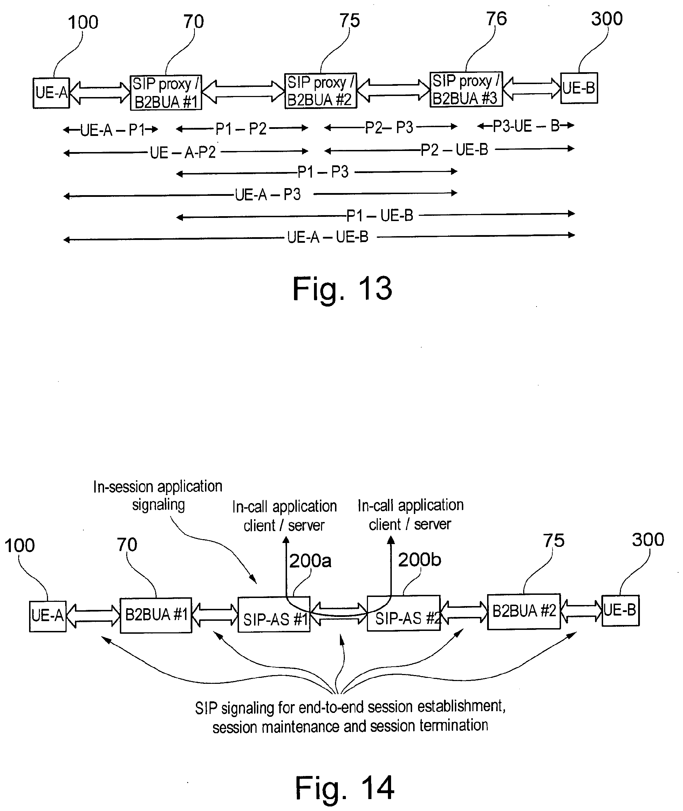

The above described principles can be further enhanced to facilitate in-session communication between an arbitrary pair of SIP entities in the SIP chain between UE-A 100 and UE-B 300. This is shown in Fig. 13, wherein Fig. 13 depicts an example session case whereby three SIP entities 70, 75, 76 are provided between UE 100 and UE 300. In-session signaling relationships may be established between any pair of entities in the SIP chain. In the example shown in Fig. 13, there are five SIP session endpoints in the chain. This leads to 10

potential relationships $\binom{5}{2}=10$

. By way of example, SIP entity 70 B2BUA #1 of Fig. 14 and B2BUA #2 75 can establish an in-session signaling relationship enabling them to transparently exchange messages (for example application messages) as shown in Fig. 14.

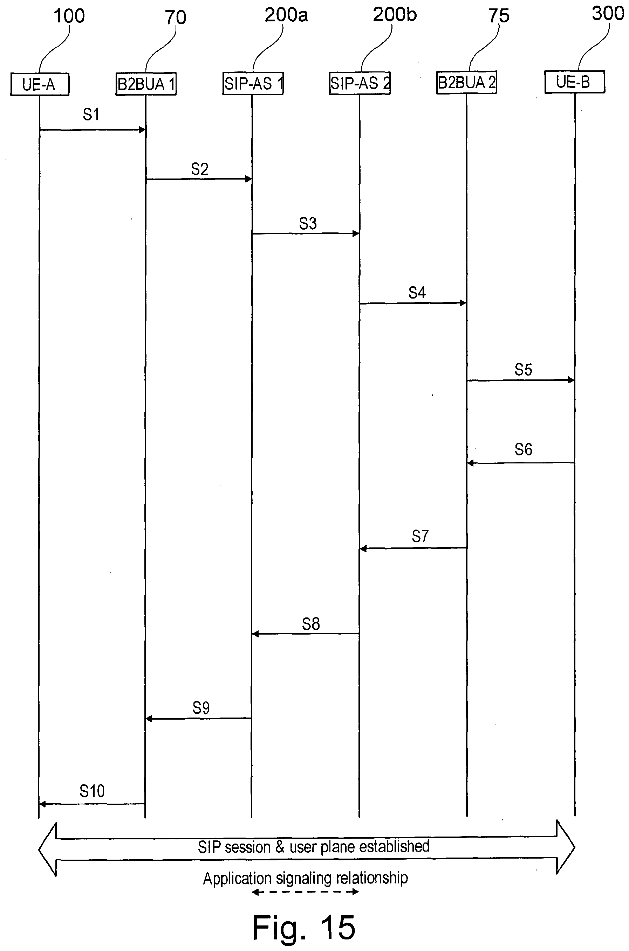

Fig. 15 shows an example message sequence diagram for establishing in-session application signaling relationships between SIP-AS1 200a and SIP-AS2 200b. The different steps carried out in this figure comprise the following content, wherein S-A means session application and the strike-through parts mean that the SIP header is removed:

> S1: *Invite sip:B-party SIP/2.0*
> *S-A: <sip:in-call-app@A-party-address>*

> S2: *Invite sip:B-party SIP/2.0*

> *S-A: <sip:in-call-app@A-party-address>*
> *S-A: <sip:in-call-app@B2BUA1-address>*

> S3: *Invite sip:B-party SIP/2.0*

> *S-A:<sip:in-call-app@A-party-address>*
> *S-A:<sip:in-call-app@B2BUA 1-address>*
> *S-A: <sip:in-call-app@SIPAS1-address>*

> S4: *Invite sip:B-party SIP/2.0*

> *S-A: <sip:in-call-app@A-party-address>*
> *S-A:<sip:in-call-app@B2BUA1-address>*
> *S-A:<sip:in-call-app@SIPAS1-address>*
> *S-A:<sip:in-call-app@SIPAS2-address>*

> S5: *Invite sip:B-party SIP/2.0*

> *S-A:<sip:in-call-app@A-party-address>*
> *S-A:<sip:in-call-app@B2BUA 1-address>*
> *S-A:<sip:in-call-app@SIPAS1-address>*
> *S-A:<sip:in-call-app@SIPAS2-address>*
> *S-A:<sip:in-call-app@B2BUA2-address>*

> S6: *SIP/2.0 200 Ok S-A:<sip:in-call-app@A-party-address>*

> *S-A:<sip:in-call-app@B2BUA1-address>*
> *S-A:<sip:in-call-app@SIPAS1-address>*
> *S-A:<sip:in-call-app@SIPAS2-address>*

> S7: *SIP/2.0 200 Ok S-A:<sip:in-call-app@A-party-address>*

> *S-A:<sip:in-call-app@B2BUA1-address>*
> *S-A:<sip:in-call-app@SIPAS1-address>*

> S8: *SIP/2.0 200 Ok*

> *S-A:<sip:in-call-app@A-party-address>*
> *S-A:<sip:in-call-app@B2BUA1-address>*
> *S-A:<sip:in-call-app@SIPAS1-address>;*
> *<sip:in-call-application@SIPAS2-address>*

> S9: *SIP/2.0 200 Ok*
> *S-A:<sip:in-call-app@A-party-address>*

> S10: *SIP/2.0 200 Ok*

The principles disclosed in Fig. 15 can be summarized as follows:
An in-session application signaling relationship may be established between any pair of SIP signaling entities from UE-A 100 to UE-B 300, including these two entities.

Any permutation of in-session application signaling relationships may be established. In the example of Fig. 15, a maximum of $\binom{6}{2}=15$ relationships can be established:

> ○ UE-A - B2BUA1; UE-A - SIP-AS1; UE-A - SIP-AS2; UE-A - B2BUA2; UE-A - UE-B
> ○ B2BUA1 - SIP-AS1; B2BUA1 - SIP-AS2; B2BUA1 - B2BUA2; B2BUA1 - UE-B
> ○ SIP-AS1 - SIP-AS2; SIP-AS1 - B2BUA2; SIP-AS1 - UE-B
> ○ SIP-AS2 - B2BUA2; SIP-AS2 - UE-B
> ○ B2BUA2 - UE-B

For the signaling the following conclusions can be drawn:
As the Invite request message is conveyed from UE-A 100 to UE-B 300, each entity may add itself to a stack of session application headers; an entity will do this only when it intends to establish an in-session signaling relationship with one or more designated other SIP entities, typically an application server. In the example of Fig. 15, each of the entities UE-A up to and including B2BUA2 adds a session application header in the Invite request.

When an entity sends 200 Ok, it may add its own address to the session application header for each upstream SIP entity with which it wishes to establish an in-session application signaling relationship. In the example of Fig. 15, only SIP-AS2 200b wishes to establish an in-session application signaling relationship. More specifically, SIP-AS1 200a is the only SIP entity with which SIP-AS2 200b wishes to establish an in-session application signaling relationship.

A session application header in the 200 Ok may hence contain a multitude of responding addresses.

When a SIP entity receives a 200 Ok, then before passing on the 200 Ok, it may remove its own session application header from the 200 Ok. Rationale is that the presence of this header in the 200 Ok may be only for the purpose of this SIP entity. In the example of Fig. 15, SIP-AS1 removes its session application header from the 200 Ok, since that header has served its purpose, namely to inform SIP-AS1 that an in-session application signaling relationship has been established with SIP-AS2.

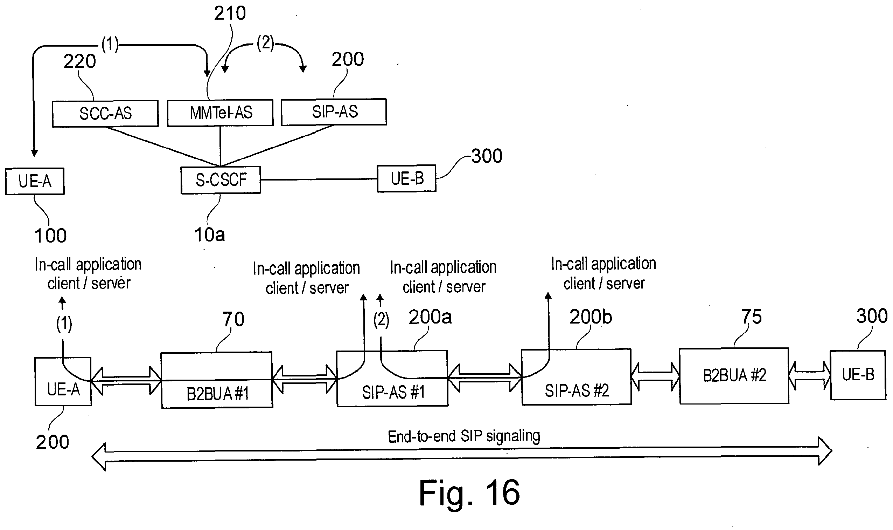

Fig. 16 shows an example use case where the following in-session application relationships are established: A first in-session application signaling relationship is established between UE-A 200 and MMTel-AS 210, and a second in-session application signaling relationship is established between MMTel-AS 210 and SIP-AS 200. The top part of Fig. 16 reflects the network architecture, whereas the bottom part represents the logical sequence of the SIP entities. The two relationships may be established in the method described above in connection with Fig. 15. The first relationship between UE-A 100 and MMTel-AS 210 may be used by UE-A 100 for interacting with service logic that is coupled to MMTel or with a service logic that is coupled through HTTP-Rest with MMTel. The second relationship between MMTel-AS 210 and SIP-AS 200 may be used for the purpose of service interworking between MMTel-AS 210 or the service logic that is coupled through HTTP-Rest with MMTel and SIP-AS 200 or the service logic that is coupled through HTTP-Rest with SIP-AS 200.

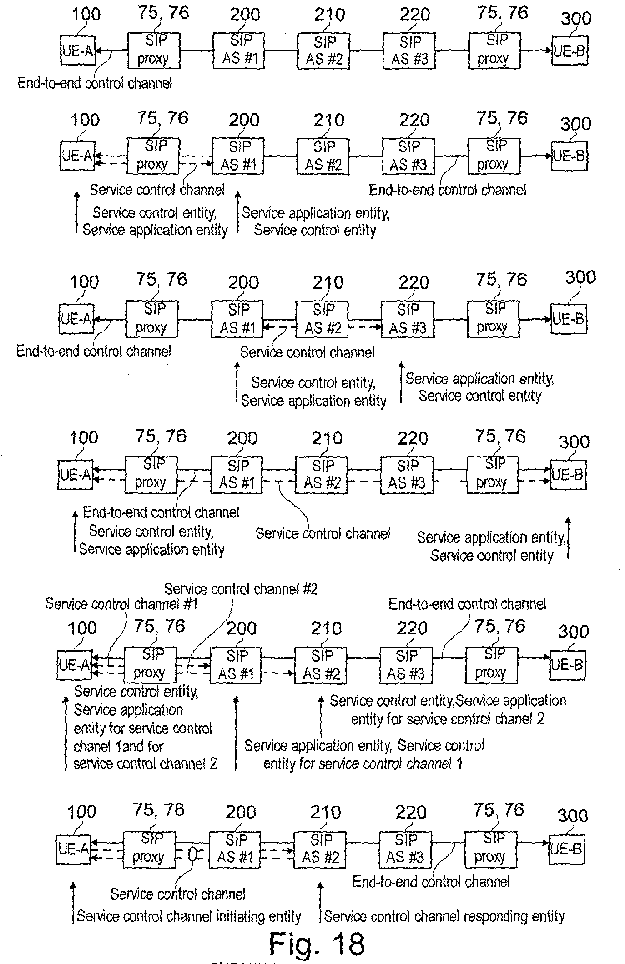

Fig. 18 summarizes different options: In the first line, an end-to-end control channel as known is established between UE-A 100 and UE-B 300. In the second line of Fig. 18, a service control channel is established between UE-A 100 and SIP-AS #1 200, whereas in the third line a service control channel is established between two application servers such as application server 200 and 220. In the fourth line, a service control channel is established between the two UEs 100, 300 whereas in the last but one line a multi-service control channel embodiment is shown with a first service control channel between UE-A 100 and SIP-AS #1 200 and a second service control channel being formed between UE-A 100 and SIP-AS #2 210. UE-A is the service control entity and the service application entity for service control channel 1 and for service control channel 2. SIP-AS 200 is the service application entity and the service control entity for service control channel 1, wherein SIP-AS 210 is the service application entity and the service control entity for service control channel 2. In the last line of Fig. 18, a service control channel is set up between UE-A 100 and SIP-AS #2 210, wherein UE-A adds offer data in the SIP message, SIP-AS #2 210 adds acceptance data.

From the discussion of the above figures some general conclusions can be drawn. When a communication channel (for example a service control channel) should be set up, an initiating entity (for example a service control initiating entity such as UE-A 100) can transmit a first message in the (SIP) communication channel, this message comprising offer data indicating that the initiating entity supports one or more communication channels. Furthermore, as could be deduced from the examples given above, the offer data contain the address at which the initiating entity is able to receive the messages. A responding entity (for example a service control responding entity) can then send an answer message on the end-to-end control channel, this answer message comprising acceptance data in response to the offer data. The acceptance data indicate that the responding entity has accepted to a set up of the communication channel (for example the service control channel) and the acceptance data comprise the address at which the responding entity is configured to receive the messages (for example the service control messages). Thus, the initiating entity can then use this address in order to send messages to the responding entity.

As could be inter alia deduced from Fig. 12, the received message, i.e. the second message can comprise acceptance data originating from more than one responding entities which are located in the end-to-end control channel towards the second entity. The end-to-end control channel is set up (or already established) between the first entity and the second entity, and the first message is transmitted in direction of the second entity, the response message being received from the second entity. The acceptance data originating from the more than one responding entities indicate that each of the one more than one responding entities have accepted to set up dedicated communication channels (for example service control channels) between the initiating entity and each of the more than one responding entities, and the acceptance data comprise an address at which each of the responding entities is configured to receive messages (for example service control messages). The initiating entity then stores the addresses in order to set up the dedicated communication channels between the initiating entity and each of the responding entities. In the embodiment of Fig. 12, UE-A, a service control initiating entity, received acceptance data from SIP-AS 200a and SIP-AS 200b so that it was able to build the two different signaling relationships. The first entity may be the control initiating entity and may be a user equipment. Furthermore, the initiating entity can contain the application server.

Furthermore, as could be seen from the examples above, the acceptance data may be removed from the second message before the second message is transmitted to the first entity. The first entity may comprise a user equipment or the initiating entity. Furthermore, an application server may comprise the initiating entity.

In the same way for the responding entity (for example a service control responding entity) receiving the message with the offer data, this received message furthermore comprise offer data originating from more than one initiating entities (for example service control initiating entities) located in the end-to-end control channel towards the first entity. The offer data originating from more than one initiating entities comprise the address at which each of the more than one initiating entities is configured to receive the information (for example service control messages). This could be inter alia deduced from Fig. 15, where the message is received in steps S1 to S5 comprising offer data originating from more than one service control initiating entities. The responding entity then stores the received addresses of the initiating entities where the responding entity accepts the set up of dedicated communication channel (for example dedicated service control channels). A second message is then transmitted to the first entity which comprises the acceptance data in response to the offer data. The acceptance indicate that the responding entity accepts the set up of the dedicated communication channels, the acceptance data comprising an address at which the responding entity is configured to receive the information from the more than one initiating entities. This can be also deduced from Fig. 12, where the message received at UE 100 comprises the acceptance data from SIP-AS 200a and from SIP-AS 200b.

The second entity may comprise or can be part of the responding entity (for example the service control responding entity), wherein the second entity may comprise a user equipment.

The offer data may also be added to the second message transmitted back to the first entity. Furthermore, the second message from the second entity can be received and the acceptance data can be added before the received second message is transmitted further to the first entity. An application server may furthermore comprise the service control responding entity.

Furthermore, it may be deduced from the different embodiments that the first message is a request message and the second message is a response message. More precisely, the request message may be a SIP Invite message and the response message may be a SIP 200 Ok message.

The offer data and/or the acceptance data may be added as a header of the first and/or the second message.

When the end-to-end control channel is established and the signaling relationship between the initiating entity and the responding entity is established, the initiating entity can play the role of the a control entity (for example a service control entity), and the responding entity can play the role of an application entity (for example a service application entity) which applies the service to for example a data flow. The information (for example the control message) itself including the instruction how to apply the service to the data flow may be added as information to the control message. The control message received on the end-to-end control channel may be received from the first entity and the address is added to the control message and transmitted further to the second entity. In this embodiment, the control entity may be located between the first and the second entity, and the application entity may be further located in direction of the second entity. Furthermore, the control entity may comprise an application server. In another embodiment, the control message may be generated by the control entity on the end-to-end control channel with the address of the first entity as destination address before the information is added and the control message is transmitted to the second entity. The first entity may comprise the service control entity.

As far as the application entity itself is concerned, which applies the service in accordance with the information contained in the control message, the received control message may not be forwarded to the second entity.

The second entity may comprise the application entity or the mobile entity. In another embodiment the received control message may be forwarded to the second entity without the extracted address and without the extracted information. The application entity may comprise the application server and the application entity can transmit an acknowledgement message in response to the received control message using a source address contained in the received control message as destination address. The control message may be a service control message and the generated control message may be configured such that it cannot establish, maintain or release the end-to-end control channel.

The control message can be generated in accordance with a session initiation protocol. Furthermore, the address and the information may be extracted from the request line and from a header, respectively, of the control message.

The address and the information may be extracted from a header of the control message.

Furthermore, the generated control message may be designed such that it cannot establish, maintain or release the end-to-end control channel. Furthermore, it is possible that the one or more first entities are service control entities and that the second entity is a service application entity.

As far as the initiating entity, by way of example the service control initiating entity, is concerned, the message managing unit may be configured to remove acceptance data from the second message before transmitting the second message to the first entity.

Furthermore, an initiating entity may be provided to initiate the set up of one or more communication channels, the initiating entity comprising a processor and a memory. The memory can contain instructions executable by said processor whereby the initiating entity is operative to transmit a first message on an end-to-end control channel between a first entity and a second entity, wherein the first message comprises as a destination address a second entity address and wherein offer data is added to the transmitted first message. The offer data can indicate that the initiating entity is configured to support one or more communication channels and the offer data can comprise an address at which the initiating entity is configured to receive the messages. Furthermore, the initiating entity is operative to receive a second message on the end-to-end control channel, wherein the second message comprises as destination address an address of the first entity. The second message furthermore comprises acceptance data in response to the offer data and the acceptance data indicate that responding entities have accepted the set up of a communication channel and the acceptance data comprise the addresses at which the responding entities are configured to receive the messages. Furthermore, the initiating entity is operative to store the addresses at which the responding entities are configured to receive the message.

Furthermore, the responding entity configured to set up one or more communication channels can comprise a processor and a memory, wherein the memory contains instructions executable by said processor. The responding entity is operative to receive a first message on the end-to-end control channel between the first entity and the second entity, wherein the first message comprises as a destination address the second entity address.

The first message furthermore comprises offer data indicating that one of the initiating entities is configured to support a communication channel and the offer data comprise an address at which said one initiating entity is configured to receive the messages. The responding entity is furthermore operative to store the addresses at which the more than one initiating entities are configured to receive the messages if the responding entity accepts to set up a communication channel between the more than one initiating entities and the responding entity. Furthermore, it is operative to transmit a second message to the first entity, wherein the second message comprises acceptance data in response to the offer data. The acceptance data indicate that the responding entity accepts the set up of the communication channels and the acceptance data comprise an address at which the responding entity is configured to receive the messages.

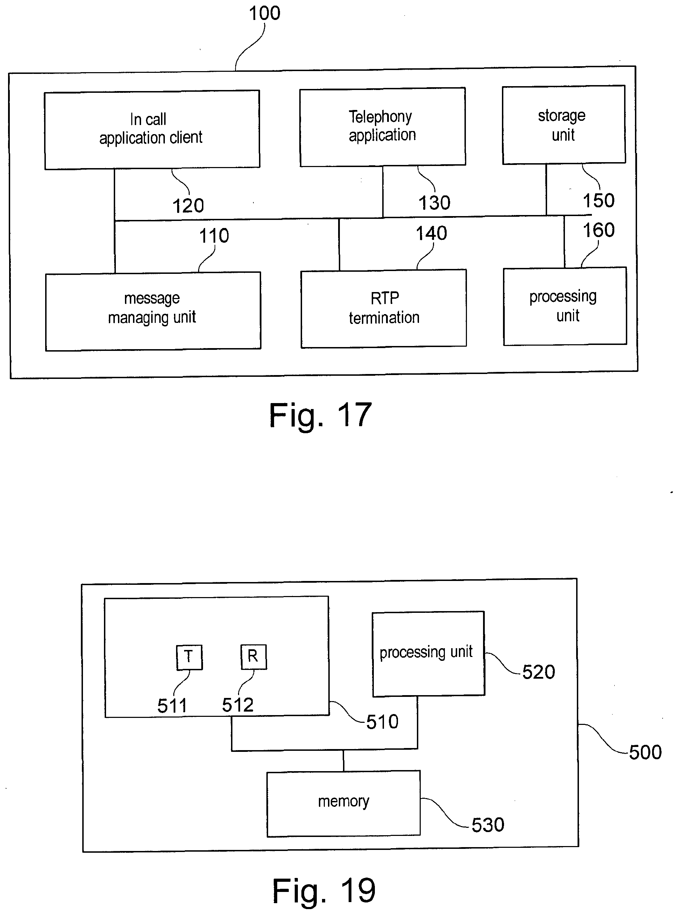

Fig. 17 shows an example schematic view of a mobile entity 100 which may play the role of a initiating entity (for example a service control initiating entity), a responding entity (for example a service control responding entity) or a control entity (for example a service control entity) as discussed above. A message managing unit 110 is provided which is configured to transmit the different messages discussed above when the UE is acting as initiating or responding entity or as a control entity. The message managing unit 110 may furthermore operate as input/output unit providing the capability of transmitting and receiving control messages or user data to other entities. The UE 100 can furthermore comprise an in-call application client 120 to which the in-session messages for in-call application (control) is forwarded as discussed inter alia in connection with Fig. 3. When the UE receives an in-call application command, it may, by way of example, display information contained in the application command, on the UE's display. Alternatively, the application command may comprise a request for the user to provide input needed for application control by an application server. The telephony application 130 is provided to control the normal phone-related operation of the mobile entity. RTP termination 140 is provided to receive and transmit the media data or user plane data. A storage unit 150 is provided which can store a suitable program code to be carried out by the different functional entities or by a processing entity 160, which can be provided to coordinate the operation of the whole user entity.

Fig. 19 shows an example of an application entity 500 (which may correspond to the service application entity 50 shown in Fig. 2 or Fig. 3) which may apply a service to the data flow. The application entity comprises an input/output unit 510 with a transmitter 511 and a receiver 512, the transmitter 511 representing the possibility to transmit user data or control messages to other entities, the receiver 512 representing the possibility to receive user data or (control) messages from other entities. A processing unit 520 is provided which is responsible for the operation of the application entity, a memory 530 storing the suitable program code to be carried out by the processing unit 520 in order to operate the application entity as discussed above.

The above described embodiments enable a mobile entity or any other entity in a end-to-end control channel to communicate with any other entity in the end-to-end control channel for example to establish, utilize and control network-based in-call applications in a transparent manner without the remote party to notice it as it would be the case with an audible indication. The method is also transparent in the sense that it does not rely on any other data communication channel than the already established end-to-end control channel.

An additional advantage can be seen that it provides means for transparent data, in-session communication between two entities (for example application servers) that are connected in the chain of the call. This capability may become relevant for advanced enterprise or residential use cases where for example multiple application servers may jointly control a call. By way of example, MMTel-AS and SIP-AS chained in a call, the SIP-AS may provide enterprise services for the served subscriber.

An in-call signaling relationship (for example application signaling relationship) may be established between two entities (for example a UE and a SIP-AS). This in-call signaling relationship allows for transparent exchange of signaling messages between the entities, for example for the control of in-call applications. The transfer of the messages (for example SIP messages, specifically the Info transaction), may occur in accordance with standard signaling rules (for example SIP signaling rules). One aspect is that the in-call application signaling is explicitly addressed towards the remote end (for example by virtue of the fact that the UE applies the regular SIP routing, as applicable for this SIP session), but is implicitly addressed towards another entity (for example SIP-AS serving the subscriber, by virtue of the fact that it contains the session application header). The result is that there is an in-session signaling relationship established between two entities (for example on the end-to-end SIP chain). The signaling protocol (for example SIP) is carrying the messages for the in-session signaling relationship, but there is no impact on the end-to-end signaling session (for example SIP session).

The in-session relationship may also be established between two entities in the chain (for example SIP-AS's in the SIP chain), as described in one of the examples. This method will be important with proliferation of for example SIP-AS's within a single SIP session, e.g. the chaining of a SIP-AS for advanced enterprise/residential services and MMTel-AS.

The capability may be formed by a session header (for example the session application SIP header). This header may be used to let two entities located in an end-to-end (SIP) session path between two (SIP) session endpoints establish a transparent communication channel with one another. The end-to-end (SIP) session acts as conveyer for the transparent communication channel between the two entities located on this (SIP) session path. But yet, the (SIP) communication between these two entities located on this (SIP) session path does not form part of end-to-end (SIP) session signaling.

**Claims**

1. A method, by an initiating entity (100, 200, 210, 220, 70, 75, 76), to initiate the set up of communication channels for exchange of information between the initiating entity and more than one responding entities (100, 200, 210, 220, 70, 75, 76), wherein the initiating entity and the more than one responding entities are located in an end-to-end control channel existing between a first entity (100) and a second entity (300), the method comprising the steps of:

   - transmitting a first message of a Session Initiation Protocol on the end-to-end control channel between the first entity (100) and the second entity (300), the first message comprising as a destination address the second entity address, wherein offer data is added to the transmitted first message, the offer data indicating that the initiating entity (100, 200, 210, 220, 70, 75, 76) is configured to support the communication channels and the offer data comprising an address at which the initiating entity is configured to receive the information,
   - receiving a second message of the Session Initiation Protocol on the end-to-end control channel, the second message comprising as destination address an address of the first entity, wherein the second message further comprises acceptance data in response to the offer data, the acceptance data indicating that a responding entity has accepted the set up of a communication channel and the acceptance data comprising an address at which the responding entity is configured to receive the information,
   - storing the address at which the responding entity is configured to receive the information, wherein the received second message further comprises acceptance data originating from the more than one responding entities (70, 75, 76, 200, 210, 220) located in the end-to-end control channel towards the second entity, the acceptance data originating from the more than one responding entities indicating that each of the more than one responding entities have accepted to set up dedicated communication channels between the initiating entity and each of the more than one responding entities, and the acceptance data comprising addresses at which each of the more than one responding entities is configured to receive the information,
   - storing the addresses of the more than one responding entities at the initiating entity in order to set up the dedicated communication channels between the initiating entity and each of the more than one responding entities.

2. The method according to claim 1, wherein the communication channels between the initiating entity and the responding entities comprise service control channels, and the initiating entity comprises a service control initiating entity, and the responding entities comprise service control responding entities and the information comprising service control messages.

3. The method according to claim 1 or 2 further comprising removing acceptance data from the second message before transmitting the second message to the first entity.

4. The method according to any of the preceding claims, wherein the first message is a request message and the second message is a response message.

5. The method according to any of the preceding claims, wherein at least one of the offer data and the acceptance data are added to a header of at least one of the first and second message.

6. A method, by a responding entity (70, 75, 76, 100, 200, 210, 220), to set up communication channels for the exchange of information between more than one initiating entities (100, 200, 210, 220, 70, 75, 76) and the responding entity, wherein the more than one initiating entities and the responding entity are located in an end-to-end control channel existing between a first entity (100) and a second entity (300), the method comprising the steps of:

   - receiving a first message of a Session Initiation Protocol on the end-to-end control channel between the first entity (100) and the second entity (300), the first message comprising as a destination address the second entity address, wherein the first message further comprises offer data indicating that one of the initiating entities (100, 200, 210, 220, 70, 75, 76) is configured to support a communication channel and the offer data comprising an address at which said one initiating entity is configured to receive the information,
   - storing the address at which said one initiating entity is configured to receive the information if the responding entity accepts the set up of the communication channel between said one initiating entity and the responding entity,
   - transmitting a second message of a Session Initiation Protocol to the first entity, the second message comprising acceptance data in response to the offer data, the acceptance data indicating that the responding entity accepts the set up of the communication channel and the acceptance data comprising an address at which the responding entity is configured to receive the information,
   wherein the received first message further comprises offer data originating from the more than one initiating entities (100, 200, 210, 220, 70, 75) located in the end-to-end control channel towards the first entity, the offer data originating from the more than one initiating entities further comprising addresses at which each of the more than one initiating entities is configured to receive the information,
   - storing the received addresses of the initiating entities where the responding entity accepts the set up of dedicated communication channels, wherein

   - the acceptance data of the second message indicates that the responding entity accepts the set up of the dedicated communication channels, the acceptance data comprising an address at which the responding entity is configured to receive the information from the more than one initiating entities.

7. The method according to claim 6, further comprising receiving the second message from the second entity and adding the acceptance data before transmitting the received second message to the first entity.

8. The method according to claim 6 or 7, wherein the offer data is added to the second message.

9. The method according to any of the claims 6 to 8, wherein the more than one communication channels between the one or more imitating entity and the responding entity comprise more than one service control channels, and the more than one initiating entities comprise more than one service control initiating entities, and the responding entity comprises a service control responding entity, and the information comprising more than one service control messages.

10. The method according to any of claims 6 to 9, wherein at least one of the offer data and the acceptance data are added to a header of at least one of the first and second message.

11. An initiating entity (100, 200, 210, 220, 70, 75, 76), configured to initiate the set up of communication channels for exchange of information between the initiating entity and more than one responding entities (100, 200, 210, 220, 70, 75, 76), wherein the initiating entity and the more than one responding entities are located in an end-to-end control channel existing between a first entity (100) and a second entity (300), the initiating entity comprising:

   - a message managing unit (110) configured

      - to transmit a first message of a Session Initiation Protocol on the end-to-end control channel between the first entity (100) and the second entity (300), the first message comprising as a destination address a second entity address, wherein the message managing unit is configured to add offer data to the transmitted first message, the offer data indicating that the initiating entity (100, 200, 210, 220, 70, 75, 76) is configured to support the communication channels and the offer data comprising an address at which the initiating entity is configured to receive the information,

- to receive a second message of the Session Initiation Protocol on the end-to-end control channel, the second message comprising as destination address an address of the first entity, wherein the second message further comprises acceptance data in response to the offer data, the acceptance data indicating that a responding entity has accepted the set up of a communication channel and the acceptance data comprising an address at which the responding entity is configured to receive the information,

- a storage unit configured to store the address at which the responding entity is configured to receive the information,

wherein the received second message further comprises acceptance data originating from the more than one responding entities (70, 75, 76, 100, 200, 210, 220) located in the end-to-end control channel towards the second entity,
the acceptance data originating from the more than one responding entities indicating that each of the more than one responding entities have accepted to set up a dedicated communication channel between the initiating entity and the respective one of the more than one responding entities, and the acceptance data further comprising addresses at which each of the more than one responding entities is configured to receive the information, wherein the storage unit is configured to store the addresses of the more than one responding entities in order to set up the dedicated communication channels between the initiating entity and each of the more than one responding entities.

12. The initiating entity according to claim 11, wherein an application server comprises the initiating entity.

13. The initiating entity according to claims 11 or 12 configured to carry out a method as mentioned in any of claims 2 to 5.

14. A responding entity (70, 75, 76, 100, 200, 210, 220), configured to set up communication channels for the exchange of information between more than one initiating entities (100, 200, 210, 220, 70, 75, 76) and the responding entity, wherein the more than one initiating entity and the responding entity are located in an end-to-end control channel existing between a first entity (100) and a second entity (300), the responding entity comprising:

- a message managing unit (110) configured to receive a first message of a Session Initiation Protocol on the end-to-end control channel between the first entity (100) and the second entity (300), the first message comprising as a destination address the second entity address, wherein the first message further comprises offer data indicating that one of the initiating entities (100, 200, 210, 220, 70, 75, 76) is configured to support a communication channel and the offer data comprising an address at which said one initiating entity is configured to receive the information,
- a storage unit (150) configured to store the address at which said one initiating entity is configured to receive the information if the responding entity accepts the set up of the communication channel between said one initiating entity and the responding entity,

wherein the message managing unit (110) is configured to transmit a second message of a Session Initiation Protocol to the first entity, the second message comprising acceptance data in response to the offer data, the acceptance data indicating that the responding entity accepts the set up of the communication channel and the acceptance data comprising an address at which the responding entity is configured to receive the information, wherein the received first message further comprises offer data originating from the more than one initiating entities (100, 200, 210, 220, 70, 75, 76) located in the end-to-end control channel towards the first entity, the offer data originating from the more than one initiating entities comprising addresses at which each of the more than one initiating entities is configured to receive the information,
wherein the storage unit (150) is configured to store the received addresses of the more than one initiating entities where the responding entity accepts the set up of dedicated communication channels,
wherein the acceptance data indicating that the responding entity accepts the set up of the dedicated communication channels, the acceptance data comprising an address at which the responding entity is configured to receive the information from the more than one initiating entities.

15. The responding entity according to claim 14, configured to carry out a method as mentioned in any of claims 7 to 10.

16. A computer program comprising program code to be executed by at least one processor (160) of an initiating entity and a responding entity, wherein execution of the program code causes the corresponding entity to perform the steps of a method according to any one of claims 1 to 5 and 6 to 10, respectively.

**Patentansprüche**

1. Verfahren durch eine einleitende Instanz (100, 200, 210, 220, 70, 75, 76) zum Einleiten des Aufbaus von Kommunikationskanälen zum Austausch von Informationen zwischen der einleitenden Instanz und mehreren antwortenden Instanzen (100, 200, 210, 220, 70, 75, 76), wobei die einleitende Instanz und die mehreren antwortenden Instanzen sich in einem Ende-zu-Ende-Steuerkanal befinden, der zwischen einer ersten Instanz (100) und einer zweiten Instanz (300) besteht, wobei das Verfahren die folgenden Schritte umfasst:

   - Senden einer ersten Nachricht eines Sitzungseinleitungsprotokolls auf dem Ende-zu-Ende-Steuerkanal zwischen der ersten Instanz (100) und der zweiten Instanz (300), wobei die erste Nachricht die Adresse der zweiten Instanz als eine Zieladresse umfasst, wobei Angebotsdaten zur gesendeten ersten Nachricht hinzugefügt werden, die Angebotsdaten angeben, dass die einleitende Instanz (100, 200, 210, 220, 70, 75, 76) zum Unterstützen der Kommunikationskanäle konfiguriert ist, und die Angebotsdaten eine Adresse umfassen, an welcher die einleitende Instanz die Informationen zu empfangen konfiguriert ist,
   - Empfangen einer zweiten Nachricht des Sitzungseinleitungsprotokolls auf dem Ende-zu-Ende-Kanal, wobei die zweite Nachricht eine Adresse der ersten Instanz als Zieladresse umfasst, wobei die zweite Nachricht ferner Akzeptierungsdaten als Antwort auf die Angebotsdaten umfasst, die Akzeptierungsdaten angeben, dass eine antwortende Instanz den Aufbau eines Kommunikationskanals akzeptiert hat, und die Akzeptierungsdaten eine Adresse umfassen, an welcher die antwortende Instanz die Informationen zu empfangen konfiguriert ist,
   - Speichern der Adresse, an welcher die antwortende Instanz die Informationen zu empfangen konfiguriert ist, wobei die empfangene zweite Nachricht ferner Akzeptierungsdaten umfasst, die von den mehreren antwortenden Instanzen (70, 75, 76, 200, 210, 220) stammen, die sich im Ende-zu-Ende-Steuerkanal zur zweiten Instanz befinden, wobei die Akzeptierungsdaten, die von der mehreren antwortenden Instanzen stammen, angeben, dass jede der mehreren antwortenden Instanzen den Aufbau von dedizierten Kommunikationskanälen zwischen der einleitenden Instanz und jeder der mehreren antwortenden Instanz akzeptiert hat, und die Akzeptierungsdaten Adressen umfassen, an welchen jede der mehreren antwortenden Instanzen die Informationen zu empfangen konfiguriert ist,
   - Speichern der Adressen der mehreren antwortenden Instanzen an der einleitenden Instanz, um die dedizierten Kommunikationskanäle zwischen der einleitenden Instanz und jeder der mehreren antwortenden Instanzen aufzubauen.

2. Verfahren nach Anspruch 1, wobei die Kommunikationskanäle zwischen der einleitenden Instanz und den antwortenden Instanzen Dienststeuerkanäle umfassen, und die einleitende Instanz eine einleitende Dienststeuerinstanz umfasst, und die antwortenden Instanzen antwortende Dienststeuerinstanzen umfassen, und die Informationen Dienststeuernachrichten umfassen.

3. Verfahren nach Anspruch 1 oder 2, ferner umfassend ein Entfernen von Akzeptierungsdaten aus der zweiten Nachricht vor dem Senden der zweiten Nachricht an die erste Instanz.

4. Verfahren nach einem der vorhergehenden Ansprüche, wobei die erste Nachricht eine Anforderungsnachricht ist, und die zweite Nachricht ein Antwortnachricht ist.

5. Verfahren nach einem der vorhergehenden Ansprüche, wobei mindestens welche von den Angebotsdaten und den Akzeptierungsdaten zu einem Header mindestens einer der ersten und der zweiten Nachricht hinzugefügt werden.

6. Verfahren durch eine antwortende Instanz (70, 75, 76, 100, 200, 210, 220) zum Aufbauen von Kommunikationskanälen zum Austausch von Informationen zwischen mehreren einleitenden Instanzen (100, 200, 210, 220, 70, 75, 76) und der antwortenden Instanz, wobei die mehreren einleitenden Instanzen und die antwortende Instanz sich in einem Ende-zu-Ende-Steuerkanal befinden, der zwischen einer ersten Instanz (100) und einer zweiten Instanz (300) besteht, wobei das Verfahren die folgenden Schritte umfasst:

   - Empfangen einer ersten Nachricht eines Sitzungseinleitungsprotokolls auf dem Ende-zu-Ende-Steuerkanal zwischen der ersten Instanz (100) und der zweiten Instanz (300), wobei die erste Nachricht die Adresse der zweiten Instanz als eine Zieladresse umfasst, wobei die erste Nachricht ferner Angebotsdaten umfasst, die angeben, dass eine der einleitenden Instanzen (100, 200, 210, 220, 70, 75, 76) zum Unterstützen eines Kommunikationskanals konfiguriert ist, und die Angebotsdaten eine Adresse umfassen, an welcher die eine einleitende Instanz die Informationen zu empfangen konfiguriert ist,
   - Speichern der Adresse, an welcher die eine einleitende Instanz die Informationen zu empfangen konfiguriert ist, wenn die antwortende Instanz den Aufbau des Kommunikationskanals zwischen der einen einleitenden Instanz und der antwortenden Instanz akzeptiert,

- Senden einer zweiten Nachricht eines Sitzungseinleitungsprotokolls an die erste Instanz, wobei die zweite Nachricht Akzeptierungsdaten als Antwort auf die Angebotsdaten umfasst, die Akzeptierungsdaten angeben, dass die antwortende Instanz den Aufbau des Kommunikationskanals akzeptiert, und die Akzeptierungsdaten eine Adresse umfassen, an welcher die antwortende Instanz die Informationen zu empfangen konfiguriert ist,

wobei die empfangene erste Nachricht ferner Angebotsdaten umfasst, die von den mehreren einleitenden Instanzen (100, 200, 210, 220, 70, 75) stammen, die sich im Ende-zu-Ende-Steuerkanal zur ersten Instanz befinden, wobei die Angebotsdaten, die von den mehreren einleitenden Instanzen stammen, Adressen umfassen, an welchen jede der mehreren einleitenden Instanzen die Informationen zu empfangen konfiguriert ist,

- Speichern der empfangenen Adressen der einleitenden Instanzen, wobei die antwortende Instanz den Aufbau von dedizierten Kommunikationskanälen akzeptiert, wobei
- die Akzeptierungsdaten der zweiten Nachricht angeben, dass die antwortende Instanz den Aufbau der dedizierten Kommunikationskanäle akzeptiert, wobei die Akzeptierungsdaten eine Adresse umfassen, an welcher die antwortende Instanz die Informationen von den mehreren einleitenden Instanzen zu empfangen konfiguriert ist.

7. Verfahren nach Anspruch 6, ferner umfassend ein Empfangen der zweiten Nachricht von der zweiten Instanz und Hinzufügen der Akzeptierungsdaten vor dem Senden der empfangenen zweiten Nachricht an die erste Instanz.

8. Verfahren nach Anspruch 6 oder 7, wobei die Angebotsdaten zur zweiten Nachricht hinzugefügt werden.

9. Verfahren nach einem der Ansprüche 6 bis 8, wobei die mehreren Kommunikationskanäle zwischen der einen oder den mehreren einleitenden Instanzen und der antwortenden Instanz mehrere Dienststeuerkanäle umfassen, und die mehreren einleitenden Instanzen mehrere einleitende Dienststeuerinstanzen umfassen, und die antwortende Instanz eine antwortende Dienststeuerinstanz umfasst, und die Informationen mehrere Dienststeuernachrichten umfassen.

10. Verfahren nach einem der Ansprüche 6 bis 9, wobei mindestens welche von den Angebotsdaten und den Akzeptierungsdaten zu einem Header mindestens einer der ersten und der zweiten Nachricht hinzugefügt werden.

11. Einleitende Instanz (100, 200, 210, 220, 70, 75, 76), die zum Einleiten des Aufbaus von Kommunikationskanälen zum Austausch von Informationen zwischen der einleitenden Instanz und mehreren antwortenden Instanzen (100, 200, 210, 220, 70, 75, 76) konfiguriert ist, wobei die einleitende Instanz und die mehreren antwortenden Instanzen sich in einem Ende-zu-Ende-Steuerkanal befinden, der zwischen einer ersten Instanz (100) und einer zweiten Instanz (300) besteht, wobei die einleitende Instanz umfasst:

- eine Nachrichtenhandhabungseinheit (110), die konfiguriert ist zum:

- Senden einer ersten Nachricht eines Sitzungseinleitungsprotokolls auf dem Ende-zu-Ende-Steuerkanal zwischen der ersten Instanz (100) und der zweiten Instanz (300), wobei die erste Nachricht eine Adresse der zweiten Instanz als eine Zieladresse umfasst, wobei die Nachrichtenhandhabungseinheit zum Hinzufügen von Angebotsdaten zur gesendeten ersten Nachricht konfiguriert ist, die Angebotsdaten angeben, dass die einleitende Instanz (100, 200, 210, 220, 70, 75, 76) zum Unterstützen der Kommunikationskanäle konfiguriert ist, und die Angebotsdaten eine Adresse umfassen, an welcher die einleitende Instanz die Informationen zu empfangen konfiguriert ist,
- Empfangen einer zweiten Nachricht des Sitzungseinleitungsprotokolls auf dem Ende-zu-Ende-Kanal, wobei die zweite Nachricht eine Adresse der ersten Instanz als Zieladresse umfasst, wobei die zweite Nachricht ferner Akzeptierungsdaten als Antwort auf die Angebotsdaten umfasst, wobei die Akzeptierungsdaten angeben, dass eine antwortende Instanz den Aufbau eines Kommunikationskanals akzeptiert hat, und die Akzeptierungsdaten eine Adresse umfassen, an welcher die antwortende Instanz die Informationen zu empfangen konfiguriert ist,

- eine Speichereinheit, die zum Speichern der Adresse konfiguriert ist, an welcher die antwortende Instanz die Informationen zu empfangen konfiguriert ist,

wobei die empfangene zweite Nachricht ferner Akzeptierungsdaten umfasst, die von den mehreren antwortenden Instanzen (70, 75, 76, 100, 200, 210, 220) stammen, die sich im Ende-zu-Ende-Steuerkanal zur zweiten Instanz befinden, wobei die Akzeptierungsdaten, die von den mehreren antwortenden Instanzen stammen, angeben, dass jede der mehreren antwortenden Instanzen den Aufbau von dedizierten Kommunikationskanälen zwischen der einleitenden Instanz und jeder der mehr mehreren antwortenden Instanz akzeptiert hat, und die Akzeptierungsdaten Adressen umfassen, an welchen jede der mehreren antwortenden Instanzen die Informationen zu empfangen konfiguriert ist, wobei die Speichereinheit so konfiguriert ist, dass sie die Adressen der mehreren antwortenden Instanzen speichert, um die dedizierten Kommunikationskanäle zwischen der einleitenden Instanz und jeder der mehreren antwortenden Instanzen aufzubauen.

**12.** Einleitende Instanz nach Anspruch 11, wobei ein Anwendungsserver die einleitende Instanz umfasst.

**13.** Einleitende Instanz nach Anspruch 11 oder 12, die zum Durchführen eines Verfahrens nach einem Ansprüche 2 bis 5 konfiguriert ist.

**14.** Antwortende Instanz (70, 75, 76, 100, 200, 210, 220), die zum Aufbauen von Kommunikationskanälen zum Austausch von Informationen zwischen mehreren einleitenden Instanzen (100, 200, 210, 220, 70, 75, 76) und der antwortenden Instanz konfiguriert ist, wobei die mehreren einleitenden Instanzen und die antwortende Instanz sich in einem Ende-zu-Ende-Steuerkanal befinden, der zwischen einer ersten Instanz (100) und einer zweiten Instanz (300) besteht, wobei die antwortende Instanz umfasst:

- eine Nachrichtenhandhabungseinheit (110), die zum Empfangen einer ersten Nachricht eines Sitzungseinleitungsprotokolls auf dem Ende-zu-Ende-Steuerkanal zwischen der ersten Instanz (100) und der zweiten Instanz (300) konfiguriert ist, wobei die erste Nachricht die Adresse der zweiten Instanz als eine Zieladresse umfasst, wobei die erste Nachricht ferner Angebotsdaten umfasst, die angeben, dass eine der einleitenden Instanzen (100, 200, 210, 220, 70, 75, 76) zum Unterstützen eines Kommunikationskanals konfiguriert ist, und die Angebotsdaten eine Adresse umfassen, an welcher die eine einleitende Instanz die Informationen zu empfangen konfiguriert ist,
- eine Speichereinheit (150), die zum Speichern der Adresse konfiguriert ist, an welcher die eine einleitende Instanz die Informationen zu empfangen konfiguriert ist, wenn die antwortende Instanz den Aufbau des Kommunikationskanals zwischen der einen einleitenden Instanz und der antwortenden Instanz akzeptiert,

wobei die Nachrichtenhandhabungseinheit (110) zum Senden einer zweiten Nachricht eines Sitzungseinleitungsprotokolls an die erste Instanz konfiguriert ist, wobei die zweite Nachricht Akzeptierungsdaten als Antwort auf die Angebotsdaten umfasst, die Akzeptierungsdaten angeben, dass die antwortende Instanz den Aufbau des Kommunikationskanals akzeptiert, und die Akzeptierungsdaten eine Adresse umfassen, an welcher die antwortende Instanz die Informationen zu empfangen konfiguriert ist, wobei die empfangene erste Nachricht ferner Angebotsdaten umfasst, die von den mehreren einleitenden Instanzen (100, 200, 210, 220, 70, 75, 76) stammen, die sich im Ende-zu-Ende-Steuerkanal zur ersten Instanz befinden, die Angebotsdaten, die von den mehreren einleitenden Instanzen stammen, Adressen umfassen, an welchen jede der mehreren einleitenden Instanzen die Informationen zu empfangen konfiguriert ist,

wobei die Speichereinheit (150) zum Speichern der empfangenen Adressen der einleitenden Instanzen konfiguriert ist, wobei die antwortende Instanz den Aufbau von dedizierten Kommunikationskanälen akzeptiert,

wobei die Akzeptierungsdaten angeben, dass die antwortende Instanz den Aufbau der dedizierten Kommunikationskanäle akzeptiert, wobei die Akzeptierungsdaten eine Adresse umfassen, an welcher die antwortende Instanz die Informationen von den mehreren einleitenden Instanzen zu empfangen konfiguriert ist.

**15.** Antwortende Instanz nach Anspruch 14, die zum Durchführen eines Verfahrens nach einem Ansprüche 7 bis 10 konfiguriert ist.

**16.** Computerprogramm, umfassend Programmcode, der durch mindestens einen Prozessor (160) einer einleitenden Instanz und einer antwortenden Instanz ausgeführt werden soll, wobei die Ausführung des Programmcodes die entsprechende Instanz zum Ausführen der Schritte eines Verfahrens nach einem der Ansprüche 1 bis 5 bzw. 6 bis 10 veranlasst.

**Revendications**

**1.** Procédé, par une entité de lancement (100, 200, 210, 220, 70, 75, 76), pour lancer l'établissement de canaux de communication pour un échange d'informations entre l'entité de lancement et plusieurs entités de réponse (100, 200, 210, 220, 70, 75, 76), dans lequel l'entité de lancement et les plusieurs entités de réponse sont situées dans un canal de commande de bout-à-bout existant entre une première entité (100) et une deuxième entité (300), le procédé comprenant les étapes de :

- la transmission d'un premier message d'un protocole d'ouverture de session sur le canal de commande de bout-à-bout entre la première entité (100) et la deuxième entité (300), le premier message comprenant, en tant qu'une adresse de destination, l'adresse de la deuxième entité, dans lequel des données d'offre sont ajoutées au premier message transmis, les données d'offre indiquant que l'entité de lancement (100, 200, 210, 220, 70, 75, 76) est configurée pour prendre en charge les canaux de communication et les données d'offre comprenant une adresse à laquelle l'entité de lancement est configurée pour recevoir les informations,

- la réception d'un deuxième message du protocole d'ouverture de session sur le canal de commande de bout-à-bout, le deuxième message comprenant, en tant qu'une adresse de destination, une adresse de la première entité, dans lequel le deuxième message comprend en outre des données d'acceptation en réponse aux données d'offre, les données d'acceptation indiquant qu'une entité de réponse a accepté l'établissement d'un canal de communication et les données d'acceptation comprenant une adresse à laquelle l'entité de réponse est configurée pour recevoir les informations,

- la mémorisation de l'adresse à laquelle l'entité de réponse est configurée pour recevoir les informations,

dans lequel le deuxième message reçu comprend en outre des données d'acceptation provenant des plusieurs entités de réponse (70, 75, 76, 200, 210, 220) situées dans le canal de commande de bout-à-bout vers la deuxième entité,

les données d'acceptation provenant des plusieurs entités de réponse indiquant que chacune des plusieurs entités de réponse a accepté d'établir des canaux de communication dédiés entre l'entité de lancement et chacune des plusieurs entités de réponse, et les données d'acceptation comprenant des adresses auxquelles chacune des plusieurs entités de réponse est configurée pour recevoir les informations,

- la mémorisation des adresses des plusieurs entités de réponse à l'entité de lancement afin d'établir les canaux de communication dédiés entre l'entité de lancement et chacune des plusieurs entités de réponse.

2. Procédé selon la revendication 1, dans lequel les canaux de communications entre l'entité de lancement et les entités de réponse comprennent des canaux de commande de service, et l'entité de lancement comprend une entité de lancement de commande de service, et les entités de réponse comprennent des entités de réponse de commande de service et les informations comprenant des messages de commande de service.

3. Procédé selon la revendication 1 ou 2, comprenant en outre la suppression de données d'acceptation du deuxième message après la transmission du deuxième message à la première entité.

4. Procédé selon l'une quelconque des revendications précédentes, dans lequel le premier message est un message de demande et le deuxième message est un message de réponse.

5. Procédé selon l'une quelconque des revendications précédentes, dans lequel au moins l'une des données d'offre et des données d'acceptation est ajoutée à un en-tête d'au moins l'un des premier et deuxième messages.

6. Procédé, par une entité de réponse (70, 75, 76, 100, 200, 210, 220), pour établir des canaux de communication pour l'échange d'informations entre plusieurs entités de lancement (100, 200, 210, 220, 70, 75, 76) et l'entité de réponse, dans lequel les plusieurs entités de lancement et l'entité de réponse sont situées dans un canal de commande de bout-à-bout existant entre une première entité (100) et une deuxième entité (300), le procédé comprenant les étapes de :

- la réception d'un premier message d'un protocole d'ouverture de session sur le canal de commande de bout-à-bout entre la première entité (100) et la deuxième entité (300), le premier message comprenant, en tant qu'une adresse de destination, l'adresse de la deuxième entité, dans lequel le premier message comprend en outre des données d'offre indiquant que l'une des entités de lancement (100, 200, 210, 220, 70, 75, 76) est configurée pour prendre en charge un canal de communication et les données d'offre comprenant une adresse à laquelle ladite entité de lancement est configurée pour recevoir les informations,

- la mémorisation de l'adresse à laquelle ladite entité de lancement est configurée pour recevoir les informations si l'entité de réponse accepte l'établissement du canal de communication entre ladite entité de lancement et l'entité de réponse,

- la transmission d'un deuxième message d'un protocole d'ouverture de session à destination de la première entrée, le deuxième message comprenant des données d'acceptation en réponse aux données d'offre, les données d'acceptation indiquant que l'entité de réponse accepte l'établissement du canal de communication et les données d'acceptation comprenant une adresse à laquelle l'entité de réponse est configurée pour recevoir les informations,

dans lequel le premier message reçu comprend en outre des données d'offre provenant des plusieurs entités de lancement (100, 200, 210, 220, 70, 75, 76) situées dans le canal de commande de bout-à-bout vers la première entité, les données d'offre provenant des plusieurs entités de lancement comprenant en outre des adresses auxquelles chacune des plusieurs entités de lancement est configurée pour recevoir les informations,

- la mémorisation des adresses reçues des entités de lancement où l'entité de réponse accepte l'établissement de canaux de communication dédiés, dans lequel
- les données d'acceptation du deuxième message indiquent que l'entité de réponse accepte l'établissement des canaux de communication dédiés, les données d'acceptation comprenant une adresse à laquelle l'entité de réponse est configurée pour recevoir les informations en provenance des plusieurs entités de lancement.

**7.** Procédé selon la revendication 6, comprenant en outre la réception du deuxième message en provenance de la deuxième entité et l'ajout des données d'acceptation avant la transmission du deuxième message reçu à destination de la première entité.

**8.** Procédé selon la revendication 6 ou 7, dans lequel les données d'offre sont ajoutées au deuxième message.

**9.** Procédé selon l'une quelconque des revendications 6 à 8, dans lequel les plusieurs canaux de communications entre l'une ou plusieurs entités de lancement et l'entité de réponse comprennent plusieurs canaux de commande de service, et les plusieurs entités de lancement comprennent plusieurs entités de lancement de commande de service, et l'entité de réponse comprend une entité de réponse de commande de service, et les informations comprenant plusieurs messages de commande de service.

**10.** Procédé selon l'une quelconque des revendications 6 à 9, dans lequel au moins l'une des données d'offre et des données d'acceptation est ajoutée à un entête d'au moins l'un des premier et deuxième messages.

**11.** Entité de lancement (100, 200, 210, 220, 70, 75, 76), configurée pour lancer l'établissement de canaux de communication pour un échange d'informations entre l'entité de lancement et plusieurs entités de réponse (100, 200, 210, 220, 70, 75, 76), dans laquelle l'entité de lancement et les plusieurs entités de réponse sont situées dans un canal de commande de bout-à-bout existant entre une première entité (100) et une deuxième entité (300), l'entité de lancement comprenant :

- une unité de gestion de message (110) configurée pour

- la transmission d'un premier message d'un protocole d'ouverture de session sur le canal de commande de bout-à-bout entre la première entité (100) et la deuxième entité (300), le premier message comprenant, en tant qu'une adresse de destination, une adresse de la deuxième entité, dans laquelle l'unité de gestion de message est configurée pour l'ajout de données d'offre au premier message transmis, les données d'offre indiquant que l'entité de lancement (100, 200, 210, 220, 70, 75, 76) est configurée pour prendre en charge les canaux de communication et les données d'offre comprenant une adresse à laquelle l'entité de lancement est configurée pour recevoir les informations,
- la réception d'un deuxième message du protocole d'ouverture de session sur le canal de commande de bout-à-bout, le deuxième message comprenant, en tant qu'une adresse de destination, une adresse de la première entité, dans laquelle le deuxième message comprend en outre des données d'acceptation en réponse aux données d'offre, les données d'acceptation indiquant qu'une entité de réponse a accepté l'établissement d'un canal de communication et les données d'acceptation comprenant une adresse à laquelle l'entité de réponse est configurée pour recevoir les informations,

- une unité de mémorisation configurée pour la mémorisation de l'adresse à laquelle l'entité de réponse est configurée pour recevoir les informations,

dans laquelle le deuxième message reçu comprend en outre des données d'acceptation provenant des plusieurs entités de réponse (70, 75, 76, 200, 210, 220) situées dans le canal de commande de bout-à-bout vers la deuxième entité, les données d'acceptation provenant des plusieurs entités de réponse indiquant que chacune des plusieurs entités de réponse a accepté d'établir un canal de communication dédié entre l'entité de lancement et l'une respective des plusieurs entités de réponse, et les données d'acceptation comprenant en outre des adresses auxquelles chacune des plusieurs entités de réponse est configurée pour recevoir les informations,

dans laquelle l'unité de mémorisation est configurée pour la mémorisation des adresses des plusieurs entités de réponse afin d'établir les canaux de communication dédiés entre l'entité de lancement et chacune des plusieurs entités de réponse.

**12.** Entité de lancement selon la revendication 11, dans laquelle un serveur d'application comprend l'entité de lancement.

**13.** Entité de lancement selon la revendication 11 ou 12, configurée pour effectuer un procédé selon l'une quelconque des revendications 2 à 5.

**14.** Entité de réponse (70, 75, 76, 100, 200, 210, 220), configurée pour établir des canaux de communication pour l'échange d'informations entre plusieurs entités de lancement (100, 200, 210, 220, 70, 75, 76) et l'entité de réponse, dans laquelle les plusieurs entités de lancement et l'entité de réponse sont situées dans un canal de commande de bout-à-bout existant entre une première entité (100) et une deuxième entité (300), l'entité de réponse comprenant :

- une unité de gestion de message (110) configurée pour la réception d'un premier message d'un protocole d'ouverture de session sur le canal de commande de bout-à-bout entre la première entité (100) et la deuxième entité (300), le premier message comprenant, en tant qu'une adresse de destination, l'adresse de la deuxième entité, dans laquelle le premier message comprend en outre des données d'offre indiquant que l'une des entités de lancement (100, 200, 210, 220, 70, 75, 76) est configurée pour prendre en charge un canal de communication et les données d'offre comprenant une adresse à laquelle ladite entité de lancement est configurée pour recevoir les informations,
- une unité de mémorisation (150) configurée pour la mémorisation de l'adresse à laquelle ladite entité de lancement est configurée pour recevoir les informations si l'entité de réponse accepte l'établissement du canal de communication entre ladite entité de lancement et l'entité de réponse,

dans laquelle l'unité de gestion de message (110) est configurée pour la transmission d'un deuxième message d'un protocole d'ouverture de session à destination de la première entrée, le deuxième message comprenant des données d'acceptation en réponse aux données d'offre, les données d'acceptation indiquant que l'entité de réponse accepte l'établissement du canal de communication et les données d'acceptation comprenant une adresse à laquelle l'entité de réponse est configurée pour recevoir les informations, dans laquelle le premier message reçu comprend en outre des données d'offre provenant des plusieurs entités de lancement (100, 200, 210, 220, 70, 75, 76) situées dans le canal de commande de bout-à-bout vers la première entité, les données d'offre provenant des plusieurs entités de lancement comprenant des adresses auxquelles chacune des plusieurs entités de lancement est configurée pour recevoir les informations,

dans laquelle l'unité de mémorisation (150) est configurée pour la mémorisation des adresses reçues des plusieurs entités de lancement où l'entité de réponse accepte l'établissement de canaux de communication dédiés,

dans laquelle les données d'acceptation indiquent que l'entité de réponse accepte l'établissement des canaux de communication dédiés, les données d'acceptation comprenant une adresse à laquelle l'entité de réponse est configurée pour recevoir les informations en provenance des plusieurs entités de lancement.

**15.** Entité de réponse selon la revendication 14, configurée pour effectuer un procédé selon l'une quelconque des revendications 7 à 10.

**16.** Programme informatique comprenant un code de programme à exécuter par au moins un processeur (160) d'une unité de lancement et d'une unité de réponse, dans lequel une exécution du code de programme amène l'entité correspondante à effectuer respectivement les étapes d'un procédé selon l'une quelconque des revendications 1 à 5 et 6 à 10.

Fig. 1

Fig. 2

## Fig. 3

## Fig. 4

Logical S-CSCF process for originating SIP session establishment

# Fig. 5

# Fig. 6

EP 3 281 376 B1

Fig. 7

Fig. 8

Fig. 9

Fig. 10

51

Relation between UE
and VAS#2 server

VAS    In-call
apps                50

220    210    (HTTP-Rest) (HTTP-Rest)

SCC-    MMTel    SIP-    200
AS    -AS    AS

ISC    ISC    ISC

100

Relation between UE
and in-call apps server

UE    ──Gm, Mw──▶    CSCF    ── Mw ──▶ Remote party

10

## Fig. 11

100    200a    200b

UE-A    SIP-AS
A1    SIP-AS
A2

S1

S2

S3

S4    } Remote party

S5

S6

S7

User plane estabilished

S8

S9

## Fig. 12

Fig. 13

Fig. 14

SIP session & user plane established

Application signaling relationship

Fig. 15

Fig. 16

100  75, 76  200  210  220  75, 76  300

| UE-A | | SIP proxy | | SIP AS #1 | | SIP AS #2 | | SIP AS #3 | | SIP proxy | | UE-B |

End-to-end control channel

100  75, 76  200  210  220  75, 76  300

| UE-A | | SIP proxy | | SIP AS #1 | | SIP AS #2 | | SIP AS #3 | | SIP proxy | | UE-B |

Service control channel                    End-to-end control channel

Service control entity,          Service application entity,
Service application entity        Service control entity

100  75, 76  200  210  220  75, 76  300

| UE-A | | SIP proxy | | SIP AS #1 | | SIP AS #2 | | SIP AS #3 | | SIP proxy | | UE-B |

End-to-end control channel          Service control channel

Service control entity,          Service application entity,
Service application entity        Service control entity

100  75, 76  200  210  220  75, 76  300

| UE-A | | SIP proxy | | SIP AS #1 | | SIP AS #2 | | SIP AS #3 | | SIP proxy | | UE-B |

End-to-end control channel          Service control channel          Service application entity,
Service control entity,                                              Service control entity
Service application entity

Service control channel #2          End-to-end control channel
Service control channel #1
100  75, 76  200  210  220  75, 76  300

| UE-A | | SIP proxy | | SIP AS #1 | | SIP AS #2 | | SIP AS #3 | | SIP proxy | | UE-B |

Service control entity,                    Service control entity, Service application
Service application                        entity for service control chanel 2
entity for service control
chanel 1 and for                Service application entity, Service control
service control channel 2        entity for service control channel 1

100  75, 76  200  210  220  75, 76  300

| UE-A | | SIP proxy | | SIP AS #1 | | SIP AS #2 | | SIP AS #3 | | SIP proxy | | UE-B |

Service control channel                    End-to-end control channel

Service control channel initiating entity    Service control channel responding entity

## Fig. 18

100

| | | |
|---|---|---|
| In call application client | Telephony application | storage unit |

120          130          150

110          140          160

| | | |
|---|---|---|
| message managing unit | RTP termination | processing unit |

# Fig. 17

| | |
|---|---|
| T 511    R 512 | processing unit |

520

510

500

memory

530

# Fig. 19

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 1700419 A1